# EUROPÄISCHE PATENTSCHRIFT

(11) **EP 3 599 857 B1**
(45) Veröffentlichungstag und Bekanntmachung des Hinweises auf die Patenterteilung: **23.08.2023**
(21) Anmeldenummer: 18711372.5
(22) Anmeldetag: 22.03.2018
(51) Int. Cl.: A01N 43/80, A01N 43/90, A01P 13/00

(54) **HERBIZIDE MISCHUNGEN**
HERBICIDAL MIXTURES
MÉLANGES HERBICIDES

(30) Priorität: 24.03.2017 EP 17162726
(43) Veröffentlichungstag der Anmeldung: 05.02.2020
(73) Patentinhaber: Bayer Aktiengesellschaft, 51373 Leverkusen (DE)
(72) Erfinder: MENNE, Hubert, 55252 Mainz-Kastel (DE); BREITENSTRÖTER, Christoph, 50678 Köln (DE); TOSSENS, Herve, 4537 Verlaine (BE)
(74) Vertreter: BIP Patents
(86) Internationale Anmeldenummer: PCT/EP2018/057241
(87) Internationale Veröffentlichungsnummer: WO 2018/172442

(56) Entgegenhaltungen:
- WO-A1-2015/127259
- WO-A1-2017/009090
- WO-A1-2017/009148
- WO-A1-2017/025418
- WO-A1-2017/025418
- US-A- 4 405 357

## Beschreibung

Die vorliegende Erfindung betrifft herbizide Mischungen enthaltend i) 2-[(2,4-Dichlorphenyl)methyl]-4,4-dimethyl-3-isoxazolidinon und ii) Cinmethylin und mindestens ein weiteres Herbizid und/oder einen Safener sowie herbizide Zusammensetzungen enthaltend diese Mischungen. Weiterhin betrifft die vorliegende Erfindung ein Verfahren zur Herstellung dieser herbiziden Mischungen und Zusammensetzungen enthaltend diese Mischungen. Desweiteren betrifft die Erfindung die Verwendung der genannten Mischungen und Zusammensetzungen im Bereich der Landwirtschaft zur Bekämpfung von Schadpflanzen.

2-[(2,4-Dichlorphenyl)methyl]-4,4-dimethyl-3-isoxazolidinon ist bereits als selektives Herbizid aus WO 2012/148689 bekannt. Mischungen mit diesem Herbizid sind bekannt aus WO 2015/127259.

WO 2017/009095, WO 2017/009124, WO 2017/009137, WO 2017/009138, WO 2017/009054, WO 2017/009056, WO 2017/009139, WO 2017/009140, WO 2017/009092, WO 2017/009090, WO 2017/009134, WO 2017/009142, WO 2017/009143, WO 2017/009148 und WO 2017/009144 beschreiben herbizide Mischungen enthaltend Cinmethylin.

Trotz der guten Wirksamkeit von 2-[(2,4-Dichlorphenyl)methyl]-4,4-dimethyl-3-isoxazolidinon als Einzelwirkstoff und in den bereits bekannten Mischungen besteht immer noch Notwendigkeit zur Verbesserung des Anwendungsprofils dieses Wirkstoffs. Die Gründe hierfür sind vielfältig, wie z.B. weitere Erhöhung der Wirksamkeit in speziellen Anwendungsbereichen, Steigerung der Kulturpflanzenverträglichkeit, Reaktion auf neue Produktionstechniken in einzelnen Kulturen und/oder auf das zunehmende Auftreten von herbizid-resistenten Schadpflanzen.

Eine Möglichkeit zur Verbesserung des Anwendungsprofils eines Herbizids kann in der Kombination des Wirkstoffs mit einem oder mehreren geeigneten anderen Wirkstoffen bestehen. Allerdings treten bei der kombinierten Anwendung mehrerer Wirkstoffe nicht selten Phänomene der chemischen, physikalischen und biologischen Unverträglichkeit auf, z.B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Erwünscht sind auch Kombinationen von Wirkstoffen, die die Kulturpflanzenverträglichkeit allgemein erhöhen und/oder bei speziellen Produktionstechniken eingesetzt werden können. Hierzu gehört beispielsweise eine Reduktion der Saattiefe, welche aus Kulturverträglichkeitsgründen häufig nicht verwendet werden kann. Dadurch erzielt man allgemein einen schnelleren Auflauf der Kultur, reduziert deren Risiko gegenüber Auflaufkrankheiten (wie z.B. Pythium und Rhizoctonia), verbessert die Überwinterungsfähigkeit und den Bestockungsgrad. Dies gilt auch für Spät-Saaten, die ansonsten nicht möglich wären aufgrund des Kulturverträglichkeitsrisikos.

Die Aufgabe der vorliegenden Erfindung bestand in der Verbesserung des Anwendungsprofils des herbiziden Wirkstoffs 2-[(2,4-Dichlorphenyl)methyl]-4,4-dimethyl-3-isoxazolidinon mit Hinblick auf:
- ein vereinfachteres Applikationsverfahren, welches die Kosten für den Anwender reduzieren und sich dadurch schonender auf die Umwelt auswirken würde;
- eine Verbesserung die Anwendungsflexibilität der Wirkstoffe vom Vorauflauf bis in den Nachauflauf der Kultur- und der Unkrautpflanzen;
- eine Verbesserung die Anwendungsflexibilität der Wirkstoffe, die eine Applikation vor der Aussaat der Kultur ermöglichen würde;
- eine Verbesserung und Anwendungsflexibilität der Wirkungssicherheit auf Böden mit unterschiedlichen Bodeneigenschaften (z.B. Bodentyp, Bodenfeuchte);
- eine Verbesserung und Anwendungsflexibilität der Wirkungssicherheit bei unterschiedlichen Bewässerungsverfahren (Regenereignisse);
- eine Verbesserung der Wirkungssicherheit auf Unkrautpflanzen die aus unterschiedlichen Bodentiefen keimen;
- eine Verbesserung und Anwendungsflexibilität auf Böden mit unterschiedlichen pH-Werten;
- eine Verbesserung der Wirkungssicherheit auf resistente Unkrautpflanzenarten, welches eine neue Möglichkeit für ein effektives Resistenzmanagement ermöglichen würde,
- eine Verbesserung der Wirksamkeit aufgrund eines Synergismus,
wobei die zuletzt genannte Aufgabe besonders im Vordergrund stand.

Gelöst wurde diese Aufgabe durch die Bereitstellung einer Herbizidmischung enthaltend 2-[(2,4-Dichlorphenyl)methyl]-4,4-dimethyl-3-isoxazolidinon und das weitere Herbizid Cinmethylin sowie mindestens ein weiteres Herbizid und/oder mindestens einen Safener.

Ein Gegenstand der Erfindung sind somit Herbizidmischungen enthaltend:
i) 2-[(2,4-Dichlorphenyl)methyl]-4,4-dimethyl-3-isoxazolidinon 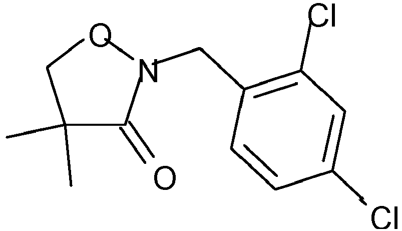
ii) Cinmethylin
   und
   mindestens ein weiteres Herbizid aus der Gruppe I:
   Acetochlor, Acifluorfen, Acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, -diolamin, -ethyl, 2-ethylhexyl, -isobutyl, -isooctyl, - isopropylammonium, -potassium, -triisopropanolammonium und -trolamine, 2,4-DB, 2,4-DB-butyl, -dimethylammonium, isooctyl, -potassium und -sodium, daimuron (dymron), dalapon, dazomet, n-decanol, desmedipham, detosyl-pyrazolate (DTP), dicamba, dichlobenil, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, -potassium, -sodium und -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, lactofen, lenacil, linuron, MCPA, MCPA-butotyl, - dimethylammonium, -2-ethylhexyl, -isopropylammonium, -potassium und -sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen: 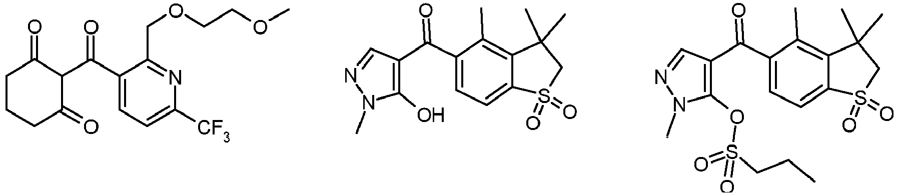 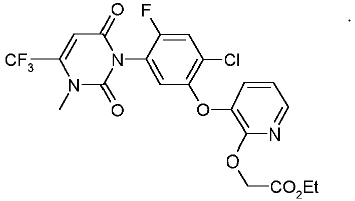
   und/oder mindestens einen Safener, wobei die Aufwandmenge, sofern die Zusammensetzung einen Safener enthält, im allgemeinen 5-2000 g AS/ha, vorzugsweise 10-500 g AS/ha und besonders bevorzugt 10-300 g AS/ha beträgt.

### Definitionen

### Herbizide aus der Gruppe I:

Acetochlor, Acifluorfen, Acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, - diolamin, -ethyl, 2-ethylhexyl, -isobutyl, -isooctyl, -isopropylammonium, -potassium, -triisopropanolammonium und -trolamine, 2,4-DB, 2,4-DB-butyl, -dimethylammonium, isooctyl, -potassium und - sodium, daimuron (dymron), dalapon, dazomet, n-decanol, desmedipham, detosyl-pyrazolate (DTP), dicamba, dichlobenil, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, -potassium, -sodium und -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, lactofen, lenacil, linuron, MCPA, MCPA-butotyl, -dimethylammonium, -2-ethylhexyl, -isopropylammonium, -potassium und - sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen:

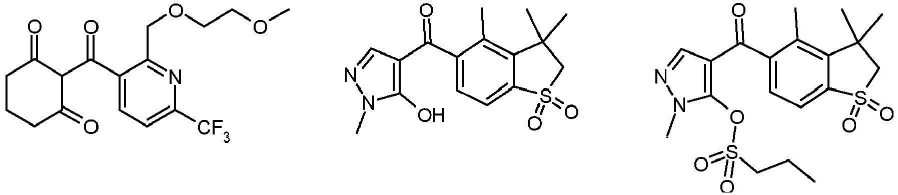

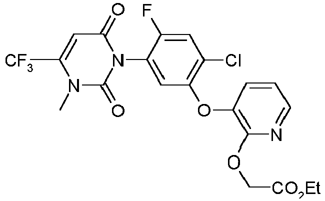

### Beispiele für Pflanzenwachstumsregulatoren als mögliche Mischungspartner sind:

Acibenzolar, acibenzolar-S-methyl, 5-Aminolävulinsäure, ancymidol, 6-benzylaminopurine, Brassinolid, Catechin, chlormequat chloride, cloprop, cyclanilide, 3-(Cycloprop-1-enyl)propionsäure, daminozide, dazomet, n-decanol, dikegulac, dikegulac-sodium, endothal, endothal-dipotassium, -disodium, und mono(N,N-dimethylalkylammonium), ethephon, flumetralin, flurenol, flurenol-butyl, flurprimidol, forchlorfenuron, gibberellic acid, inabenfide, indol-3-acetic acid (IAA), 4-indol-3-ylbutyric acid, isoprothiolane, probenazole, Jasmonsäure, Jasmonsäuremethylester, maleic hydrazide, mepiquat chloride, 1-methylcyclopropene, 2-(1-naphthyl)acetamide, 1-naphthylacetic acid, 2- naphthyloxyacetic acid, nitrophenolate-mixture, 4-Oxo-4[(2-phenylethyl)amino]buttersäure, paclobutrazol, N-phenylphthalamic acid, prohexadione, prohexadione-calcium, prohydrojasmone, Salicylsäure, Strigolacton, tecnazene, thidiazuron, triacontanol, trinexapac, trinexapac-ethyl, tsitodef, uniconazole, uniconazole-P.

### Herbizide:

Die in dieser Beschreibung genannten Herbizide sind beispielsweise aus "The Pesticide Manual", 16. Auflage 2012 bekannt.

### Safener:

Folgende Gruppen von Verbindungen kommen beispielsweise als Safener in Frage:
S1) Verbindungen aus der Gruppe heterocyclischer Carbonsäurederivate:
   S1^{a}) Verbindungen vom Typ der Dichlorphenylpyrazolin-3-carbonsäure (S1^{a}), vorzugsweise Verbindungen wie
      1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
   S1^{b}) Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäureethylester (S1-4) und verwandte Verbindungen, wie sie in EP-A-333 131 und EP-A-269 806 beschrieben sind;
   S1^{c}) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäureethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
   S1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-7), und verwandte Verbindungen, wie sie in EP-A-174 562 und EP-A-346 620 beschrieben sind;
   S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-3-carbonsäureethylester (S1-11) ("Isoxadifen-ethyl") oder -n-propylester (S1-12) oder 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinoxyderivate (S2):
   S2^{a}) Verbindungen vom Typ der 8-Chinolinoxyessigsäure (S2^{a}), vorzugsweise (5-Chlor-8-chinolinoxy)essigsäure-(1-methylhexyl)-ester ("Cloquintocet-mexyl") (S2-1), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
   S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B. "Dichlormid" (N,N-Diallyl-2,2-dichloracetamid) (S3-1), "R-29148" (3-Dichloracetyl-2,2,5-trimethyl-1,3-oxazolidin) der Firma Stauffer (S3-2), "R-28725" (3-Dichloracetyl-2,2,-dimethyl-1,3-oxazolidin) der Firma Stauffer (S3-3), "Benoxacor" (4-Dichloracetyl-3,4-dihydro-3-methyl-2H-1,4-benzoxazin) (S3-4), "PPG-1292" (N-Allyl-N-[(1,3-dioxolan-2-yl)-methyl]-dichloracetamid) der Firma PPG Industries (S3-5), "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7), "TI-35" (1-Dichloracetyl-azepan) der Firma TRI-Chemical RT (S3-8), "Diclonon" (Dicyclonon) oder "BAS145138" oder "LAB145138" (S3-9) ((RS)-1-Dichloracetyl-3,3,8a-trimethylperhydropyrrolo[1,2-a]pyrimidin-6-on) der Firma BASF, "Furilazol" oder "MON 13900" ((RS)-3-Dichloracetyl-5-(2-furyl)-2,2-dimethyloxazolidin) (S3-10), sowie dessen (R)-Isomer (S3-11).
S4) Verbindungen aus der Klasse der Acylsulfonamide (S4):
   S4^{a}) N-Acylsulfonamide der Formel (S4^{a}) und deren Salze wie sie in der WO-A-97/45016 beschrieben sind, 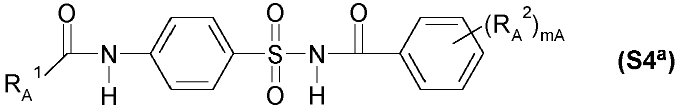 worin
      - R_{A}¹: (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      - R_{A}²: Halogen, (C₁-C₄)Alkyl, (C₁-C₄)Alkoxy, CF₃,
      - m_{A}: 1 oder 2;
      - v_{A}: ist 0, 1, 2 oder 3 bedeuten;
   S4^{b}) Verbindungen vom Typ der 4-(Benzoylsulfamoyl)benzamide der Formel (S4^{b}) und deren Salze, wie sie in der WO-A-99/16744 beschrieben sind, 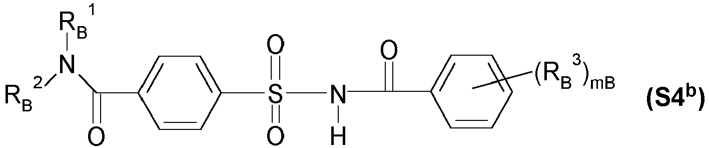 worin
      - R_{B}¹, R_{B}²: unabhängig voneinander Wasserstoff, (C₁-C₆)Alkyl, (C₃-C₆)Cycloalkyl, (C₃-C₆)Alkenyl, (C₃-C₆)Alkinyl,
      - R_{B}³: Halogen, (C₁-C₄)Alkyl, (C₁-C₄)Haloalkyl oder (C₁-C₄)Alkoxy und
      - m_{B}: 1 oder 2 bedeuten,

      z.B. solche worin
      R_{B}¹ = Cyclopropyl, R_{B}² = Wasserstoff und (R_{B}³) = 2-OMe ist ("Cyprosulfamide", S4-1),
      R_{B}¹ = Cyclopropyl, R_{B}² = Wasserstoff und (R_{B}³) = 5-Cl-2-OMe ist (S4-2),
      R_{B}¹ = Ethyl, R_{B}² = Wasserstoff und (R_{B}³) = 2-OMe ist (S4-3),
      R_{B}¹ = Isopropyl, R_{B}² = Wasserstoff und (R_{B}³) = 5-Cl-2-OMe ist (S4-4) und
      R_{B}¹ = Isopropyl, R_{B}² = Wasserstoff und (R_{B}³) = 2-OMe ist (S4-5);
   S4^{c}) Verbindungen aus der Klasse der Benzoylsulfamoylphenylharnstoffe der Formel (S4^{c}), wie sie in der EP-A-365484 beschrieben sind, 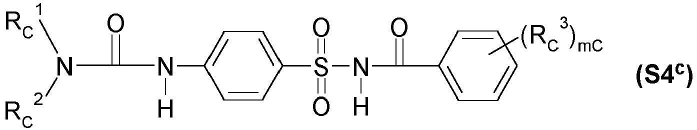 worin
      - R_{C}¹, R_{C}²: unabhängig voneinander Wasserstoff, (C₁-C₈)Alkyl, (C₃-C₈)Cycloalkyl, (C₃-C₆)Alkenyl, (C₃-C₆)Alkinyl,
      - R_{C}³: Halogen, (C₁-C₄)Alkyl, (C₁-C₄)Alkoxy, CF₃ und
      - m_{C}: 1 oder 2 bedeuten;

      beispielsweise
      1-[4-(N-2-Methoxybenzoylsulfamoyl)phenyl]-3-methylharnstoff,
      1-[4-(N-2-Methoxybenzoylsulfamoyl)phenyl]-3,3-dimethylharnstoff,
      1-[4-(N-4,5-Dimethylbenzoylsulfamoyl)phenyl]-3-methylharnstoff;
   S4^{d}) Verbindungen vom Typ der N-Phenylsulfonylterephthalamide der Formel (S4^{d}) und deren Salze, die z.B. bekannt sind aus CN 101838227, 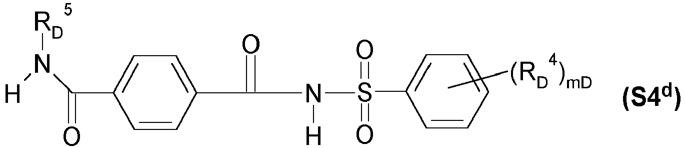 worin
      - R_{D}⁴: Halogen, (C₁-C₄)Alkyl, (C₁-C₄)Alkoxy, CF₃,
      - m_{D}: 1 oder 2;
      - R_{D}⁵: Wasserstoff, (C₁-C₆)Alkyl, (C₃-C₆)Cycloalkyl, (C₂-C₆)Alkenyl, (C₂-C₆)Alkinyl, (C₅-C₆)Cycloalkenyl bedeutet.
S5) Wirkstoffe aus der Klasse der Hydroxyaromaten und der aromatisch-aliphatischen Carbonsäurederivate (S5), z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydrochinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8),wie sie in der WO-A-98/27049 beschrieben sind, worin die Symbole und Indizes folgende Bedeutungen haben: 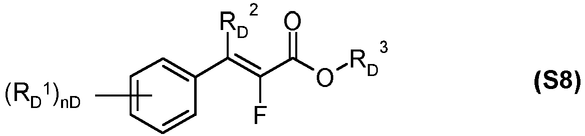
   - R_{D}¹: ist Halogen, (C₁-C₄)Alkyl, (C₁-C₄)Haloalkyl, (C₁-C₄)Alkoxy, (C₁-C₄)Haloalkoxy,
   - R_{D}²: ist Wasserstoff oder (C₁-C₄)Alkyl,
   - R_{D}³: ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze,
   - n_{D}: ist eine ganze Zahl von 0 bis 2.
S9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Reg.Nr.: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
S10) Verbindungen der Formeln (S10^{a}) oder (S10^{b}),
   wie sie in der WO-A-2007/023719 und WO-A-2007/023764 beschrieben sind,
   worin 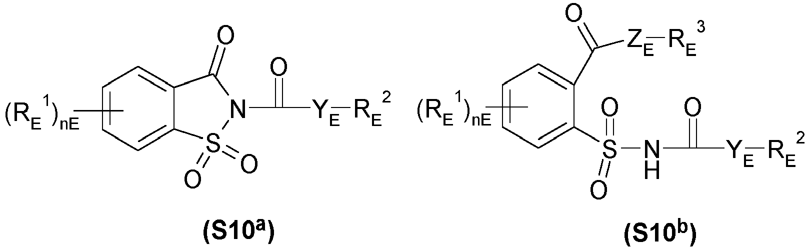
   - R_{E}¹: Halogen, (C₁-C₄)Alkyl, Methoxy, Nitro, Cyano, CF₃, OCF₃
   - Y_{E}, Z_{E}: unabhängig voneinander O oder S,
   - n_{E}: eine ganze Zahl von 0 bis 4,
   - R_{E}²: (C₁-C₁₆)Alkyl, (C₂-C₆)Alkenyl, (C₃-C₆)Cycloalkyl, Aryl; Benzyl, Halogenbenzyl,
   - R_{E}³: Wasserstoff oder (C₁-C₆)Alkyl bedeuten.
S11) Wirkstoffe vom Typ der Oxyimino-Verbindungen (S11), die als Saatbeizmittel bekannt sind, wie z. B. "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-O-(1,3 -dioxolan-2-ylmethyl)-oxim) (S11-2), das als Saatbeiz-Safener für Hirse gegen Schäden von Metolachlor bekannt ist, und
   "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetat (CAS-Reg.Nr. 205121-04-6) (S12-1) und verwandte Verbindungen aus WO-A-1998/13361.
S13) Eine oder mehrere Verbindungen aus Gruppe (S13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8) (4-Carboxy-3,4-dihydro-2H-1-benzopyran-4-essigsäure) (S13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist,
   "MG 838" (CAS-Reg.Nr. 133993-74-5) (2-propenyl 1-oxa-4-azaspiro[4.5]decan-4-carbodithioat) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorothioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (3-(2-Chlorphenylmethyl)-1-(1-methyl-1-phenyl-ethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.
S15) Verbindungen der Formel (S15) oder deren Tautomere,
   wie sie in der WO-A-2008/131861 und WO-A-2008/131860 beschrieben sind, 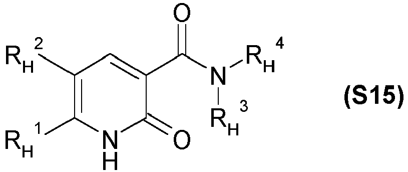 worin
      - R_{H}¹: einen (C₁-C₆)Haloalkylrest bedeutet und
      - R_{H}²: Wasserstoff oder Halogen bedeutet und
      - R_{H}³, R_{H}⁴: unabhängig voneinander Wasserstoff, (C₁-C₁₆)Alkyl, (C₂-C₁₆)Alkenyl oder (C₂-C₁₆)Alkinyl,
      wobei jeder der letztgenannten 3 Reste unsubstituiert oder durch einen oder mehrere Reste aus der Gruppe Halogen, Hydroxy, Cyano, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
   oder (C₃-C₆)Cycloalkyl, (C₄-C₆)Cycloalkenyl, (C₃-C₆)Cycloalkyl, das an einer Seite des Rings mit einem 4 bis 6-gliedrigen gesättigten oder ungesättigten carbocyclischen Ring kondensiert ist,
   oder (C₄-C₆)Cycloalkenyl, das an einer Seite des Rings mit einem 4 bis 6-gliedrigen gesättigten oder ungesättigten carbocyclischen Ring kondensiert ist,
      wobei jeder der letztgenannten 4 Reste unsubstituiert oder durch einen oder mehrere Reste aus der Gruppe Halogen, Hydroxy, Cyano, (C₁-C₄)Alkyl, (C₁-C₄)Haloalkyl, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
   bedeutet oder
      - R_{H}³: (C₁-C₄)-Alkoxy, (C₂-C₄)Alkenyloxy, (C₂-C₆)Alkinyloxy oder (C₂-C₄)Haloalkoxy bedeutet und
      - R_{H}⁴: Wasserstoff oder (C₁-C₄)-Alkyl bedeutet oder
      - R_{H}³ und R_{H}⁴: zusammen mit dem direkt gebundenen N-Atom einen vier- bis achtgliedrigen heterocyclischen Ring, der neben dem N-Atom auch weitere Heteroringatome, vorzugsweise bis zu zwei weitere Heteroringatome aus der Gruppe N, O und S enthalten kann und der unsubstituiert oder durch einen oder mehrere Reste aus der Gruppe Halogen, Cyano, Nitro, (C₁-C₄)Alkyl, (C₁-C₄)Haloalkyl, (C₁-C₄)Alkoxy, (C₁-C₄)Haloalkoxy und (C₁-C₄)Alkylthio substituiert ist, bedeutet.
S16) Wirkstoffe, die vorrangig als Herbizide eingesetzt werden, jedoch auch Safenerwirkung auf Kulturpflanzen aufweisen, z. B.
   (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)-buttersäure, 3,6-Dichlor-2-methoxybenzoesäure (Dicamba), 1-(Ethoxycarbonyl)ethyl-3,6-dichlor-2-methoxybenzoat (Lactidichlor-ethyl).

Bevorzugte Safener sind: Cloquintocet-mexyl, Cyprosulfamid, Fenchlorazol-ethylester, Isoxadifen-ethyl, Mefenpyr-diethyl, Fenclorim, Cumyluron.

Besonders bevorzugte Safener sind: Cloquintocet-mexyl, Cyprosulfamid, Isoxadifen-ethyl und Mefenpyr-diethyl.

Ganz besonders bevorzugt ist: Mefenpyr-diethyl.

AS/ha:
Soweit in dieser Beschreibung die Abkürzung "AS/ha" verwendet wird, bedeutet dies "Aktivsubstanz pro Hektar", bezogen auf 100%igen Wirkstoff. Alle Prozentangaben in der Beschreibung sind Gewichtsprozente (Abkürzung: "Gew.-%") und beziehen sich, wenn nicht anders definiert, auf das relative Gewicht der jeweiligen Komponente bezogen auf das Gesamtgewicht der herbiziden Mischung/Zusammensetzung (z.B. als Formulierung).

Cinmethylin (CAS RN 87818-31-3) ist ein racemisches Gemisch von (+/-)-2-exo-(2-Methylbenzyloxy)-1-methyl-4-isopropyl-7-oxabicyclo[2. 2.1]heptan.

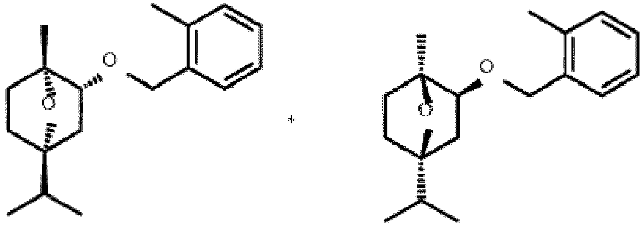

Dabei ist das Verhältnis der beiden Enantiomere zueinander in etwa gleich. Die Herstellung der enantiomerenangereicherten Verbindungen ist bekannt aus EP 0 081 893 A2.

Die erfindungsgemäßen herbiziden Zusammensetzungen weisen die erfindungsgemäßen Komponenten der Mischung i), ii) und weitere Herbizide und/oder Safener auf, und enthalten weitere Bestandteile, z.B. agrochemische Wirkstoffe aus der Gruppe der Insektizide und Fungizide und/oder im Pflanzenschutz übliche Zusatzstoffe und/oder Formulierungshilfsmittel.

Die erfindungsgemäßen herbiziden Mischungen/Zusammensetzungen weisen in einer bevorzugten Ausführungsform als Verbesserung des Anwendungsprofils synergistische Wirkungen auf. Diese synergistischen Effekte können z.B. bei gemeinsamer Ausbringung der Herbizid-Komponenten beobachtet werden, sie können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z.B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen herbiziden Mischungen/Zusammensetzungen.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Herbizid-Komponenten in den herbiziden Mischungen/Zusammensetzungen kann in weiten Bereichen variieren. Bei Anwendungen mit Aufwandmengen von 1 bis 5000 g AS/ha der Herbizid-Komponenten wird im Vor- und Nachauflaufverfahren ein relativ breites Spektrum an annuellen und perennierenden Unkräutern, Ungräsern sowie Cyperaceen bekämpft.

Die Aufwandmengen der Herbizid-Komponenten in den Mischungen/Zusammensetzungen stehen im nachstehend angegebenen Gewichtsverhältnis zueinander:
i): ii)
   im allgemeinen (1-1000):(1 - 1000), vorzugsweise (1-100):(1 - 100), besonders bevorzugt (1-50):(1 - 50).

Die Aufwandmengen der jeweiligen Herbizid-Komponenten in den herbiziden Mischungen/Zusammensetzungen sind:
- Komponente i): im allgemeinen 1 - 2000 g AS/ha, vorzugsweise 10 - 1000 g AS/ha, besonders bevorzugt 10 - 500 g AS/ha 2-[(2,4-Dichlorphenyl)methyl]-4,4-dimethyl-3-isoxazolidinon;
- Komponente ii): im allgemeinen 1 - 2000 g AS/ha, vorzugsweise 10 - 1000 g AS/ha, besonders bevorzugt 10 - 500 g AS/ha Cinmethylin.

Enthält die Zusammensetzung einen Safener, so beträgt die Aufwandmenge im allgemeinen 5-2000 g AS/ha, vorzugsweise 10-500 g AS/ha und besonders bevorzugt 10-300 g AS/ha.

Entsprechend können aus den oben genannten Aufwandmengen die Gewichtsprozente (Gew.-%) der Herbizid-Komponenten bezogen auf das Gesamtgewicht der herbiziden Zusammensetzungen berechnet werden, die zusätzlich auch noch weitere Bestandteile enthalten können.

Die erfindungsgemäßen Mischungen/Zusammensetzungen weisen eine ausgezeichnete herbizide Wirksamkeit gegen ein breites Spektrum wirtschaftlich wichtiger mono- und dikotyler annueller Schadpflanzen auf. Auch schwer bekämpfbare perennierende Schadpflanzen, die aus Rhizomen, Wurzelstöcken oder anderen Dauerorganen austreiben, werden durch die Wirkstoffe gut erfasst.

Gegenstand der vorliegenden Erfindung ist daher auch ein Verfahren zur Bekämpfung von unerwünschten Pflanzen oder zur Wachstumsregulierung von Pflanzen, vorzugsweise in Pflanzenkulturen, wobei die erfindungsgemäßen Mischungen/Zusammensetzungen auf die Pflanzen (z.B. Schadpflanzen wie monooder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden. Dabei können die erfindungsgemäßen Mischungen/Zusammensetzungen z.B. im Vorsaat- (ggf. auch durch Einarbeitung in den Boden), Vorauflauf- oder Nachauflaufverfahren ausgebracht werden. Im Einzelnen seien beispielhaft einige Vertreter der mono- und dikotylen Unkrautflora genannt, die durch die erfindungsgemäßen Mischungen/Zusammensetzungen kontrolliert werden können, ohne dass durch die Nennung eine Beschränkung auf bestimmte Arten erfolgen soll.

Monokotyle Schadpflanzen der Gattungen: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria* und *Sorghum.*

Dikotyle Unkräuter der Gattungen: *Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola* und *Xanthium.*

Werden die erfindungsgemäßen Mischungen/Zusammensetzungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab. Dieses ist auch der Fall, wenn die Applikationsmethode IBS (Incorporated By Sowing) angewandt wird. Dabei wird die herbizide Mischung/Zusammensetzung beim Säen mit in das Saatbett eingebracht.

Bei Applikation der erfindungsgemäßen Mischungen/Zusammensetzungen auf die grünen Pflanzenteile im Nachauflaufverfahren tritt nach der Behandlung Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die erfindungsgemäßen Mischungen/Zusammensetzungen können auch in Reis in das Wasser appliziert werden und werden dann über Boden, Spross und Wurzel aufgenommen.

Die erfindungsgemäßen Mischungen/Zusammensetzungen zeichnen sich durch eine schnell einsetzende und lang andauernde herbizide Wirkung aus. Die Regenfestigkeit der Wirkstoffe in den erfindungsgemäßen Mischungen/Zusammensetzungen ist in der Regel günstig. Als besonderer Vorteil fällt ins Gewicht, dass die in den erfindungsgemäßen Mischungen/Zusammensetzungen verwendeten und wirksamen Dosierungen der Komponenten i) und ii) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden auch praktisch vermieden. Durch die erfindungsgemäße Kombination von Wirkstoffen wird eine erhebliche Reduzierung der nötigen Aufwandmenge der Wirkstoffe ermöglicht.

Bei der gemeinsamen Anwendung der Komponenten i) und ii) in den erfindungsgemäßen Mischungen/Zusammensetzungen treten in bevorzugter Ausführungsform als Verbesserung des Anwendungsprofils überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine höhere und/oder längere Wirkungsstärke (Dauerwirkung); die Bekämpfung eines breiteren Spektrums von Unkräutern, Ungräsern und Cyperaceen, zum Teil mit nur einer bzw. wenigen Applikationen; schnelleres Einsetzen der herbiziden Wirkung; Kontrolle bislang nicht erfasster Arten (Lücken); Kontrolle z.B. von Arten, die Toleranzen oder Resistenzen gegenüber einzelnen oder mehreren Herbiziden aufweisen; Ausdehnung des Anwendungszeitraums und/oder eine Reduzierung der Anzahl notwendiger Einzelanwendungen bzw. eine Reduzierung der Aufwandmenge insgesamt und - als Resultat für den Anwender - ökonomisch und ökologisch vorteilhaftere Unkrautbekämpfungssysteme.

Die genannten Eigenschaften und Vorteile sind in der praktischen Unkrautbekämpfung gefordert, um landwirtschaftliche/ forstwirtschaftliche/ gärtnerische Kulturen, Grünland/Weideflächen oder Kulturen zur Energiegewinnung (Biogas, Bio-Ethanol) von unerwünschten Konkurrenzpflanzen freizuhalten und damit die Erträge qualitativ und quantitativ zu sichern und/oder zu erhöhen. Der technische Standard wird durch diese neuen Kombinationen in den erfindungsgemäßen herbiziden Mischungen/Zusammensetzungen hinsichtlich der beschriebenen Eigenschaften deutlich übertroffen.

Obgleich die erfindungsgemäßen Mischungen/Zusammensetzungen eine ausgezeichnete herbizide Aktivität gegenüber mono- und dikotylen Unkräutern aufweisen, werden Kulturpflanzen wirtschaftlich bedeutender Kulturen z.B. dikotyler Kulturen der Gattungen *Arachis, Beta, Brassica, Cucumis, Cucurbita, Helianthus, Daucus, Glycine, Gossypium, Ipomoea, Lactuca, Linum, Lycopersicon, Miscanthus, Nicotiana, Phaseolus, Pisum, Solanum, Vicia,* oder monokotyler Kulturen der Gattungen *Allium, Ananas, Asparagus, Avena, Hordeum, Oryza, Panicum, Saccharum, Secale, Sorghum, Triticale, Triticum, Zea,* insbesondere *Zea* und *Triticum,* abhängig von der Struktur der jeweiligen erfindungsgemäßen Verbindung und deren Aufwandmenge nur unwesentlich oder gar nicht geschädigt.

Darüber hinaus können die erfindungsgemäßen Mischungen/Zusammensetzungen teilweise wachstumsregulatorische Eigenschaften bei den Kulturpflanzen aufweisen. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihres verbesserten Anwendungsprofils können die erfindungsgemäßen Mischungen/Zusammensetzungen auch zur Bekämpfung von Schadpflanzen in bekannten Pflanzenkulturen oder noch zu entwickelnden toleranten oder gentechnisch veränderten Kultur- und Energiepflanzen eingesetzt werden. Die transgenen Pflanzen (GMOs) zeichnen sich in der Regel durch besondere vorteilhafte Eigenschaften aus, beispielsweise durch Resistenzen gegenüber bestimmten Pestiziden, vor allem bestimmten Herbiziden (wie z.B. Resistenzen gegenüber den Komponenten i) und ii) in den erfindungsgemäßen Mischungen/Zusammensetzungen), beispielsweise durch Resistenzen gegenüber Schadinsekten, Pflanzenkrankheiten oder Erregern von Pflanzenkrankheiten wie bestimmten Mikroorganismen wie Pilzen, Bakterien oder Viren. Andere besondere Eigenschaften betreffen z.B. das Erntegut hinsichtlich Menge, Qualität, Lagerfähigkeit, sowie der Zusammensetzung von speziellen Inhaltsstoffen. So sind transgene Pflanzen mit erhöhtem Stärkegehalt oder veränderter Qualität der Stärke oder solche mit anderer Fettsäurezusammensetzung des Ernteguts bzw. erhöhtem Vitamingehalt oder energetischer Eigenschaften bekannt. Weitere besondere Eigenschaften können in einer Toleranz oder Resistenz gegen abiotische Stressoren z.B. Hitze, Kälte, Trockenheit, Salz und ultraviolette Strahlung liegen. Gleichermaßen können die erfindungsgemäßen Mischungen/Zusammensetzungen aufgrund ihrer herbiziden und weiteren Eigenschaften auch zur Bekämpfung von Schadpflanzen in Kulturen von bekannten oder noch zu entwickelnden durch Mutantenselektion erhaltenen Pflanzen eingesetzt werden, sowie aus Kreuzungen von mutagenen und transgenen Pflanzen.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP 0221044 A, EP 0131624 A). Beschrieben wurden beispielsweise in mehreren Fällen: gentechnische Veränderungen von Kulturpflanzen zwecks Modifikation der in den Pflanzen synthetisierten Stärke (z.B. WO 92/011376 A, WO 92/014827 A, WO 91/019806 A); transgene Kulturpflanzen, welche gegen bestimmte Herbizide vom Typ Glufosinate (vgl. z.B. EP 0242236 A, EP 0242246 A) oder Glyphosate (WO 92/000377 A) oder der Sulfonylharnstoffe (EP 0257993 A, US 5,013,659) oder gegen Kombinationen oder Mischungen dieser Herbizide durch "gene stacking" resistent sind, wie transgenen Kulturpflanzen z. B. Mais oder Soja mit dem Handelsnamen oder der Bezeichnung Optimum^{™} GAT^{™} (Glyphosate ALS Tolerant); transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP 0142924 A, EP 0193259 A); transgene Kulturpflanzen mit modifizierter Fettsäurezusammensetzung (WO 91/013972 A); gentechnisch veränderte Kulturpflanzen mit neuen Inhalts- oder Sekundärstoffen z.B. neuen Phytoalexinen, die eine erhöhte Krankheitsresistenz verursachen (EP 0309862 A, EP 0464461 A); gentechnisch veränderte Pflanzen mit reduzierter Photorespiration, die höhere Erträge und höhere Stresstoleranz aufweisen (EP 0305398 A); transgene Kulturpflanzen, die pharmazeutisch oder diagnostisch wichtige Proteine produzieren ("molecular pharming"); transgene Kulturpflanzen, die sich durch höhere Erträge oder bessere Qualität auszeichnen; transgene Kulturpflanzen die sich durch eine Kombinationen z.B. der o.g. neuen Eigenschaften auszeichnen ("gene stacking").

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Hart- und Weichweizen, Gerste, Roggen, Hafer, Kreuzungen davon wie Triticale, gepflanztem oder gesäten Reis unter 'Upland'- oder 'Paddy'-Bedingungen, Mais, Hirsen wie beispielsweise Sorghum), Zuckerrübe, Zuckerrohr, Raps, Baumwolle, Sonnenblumen, Soja, Kartoffel, Tomaten, Bohnen wie beispielsweise Buschbohne und Pferdebohne, Flachs, Weidegras, Obstanbauanlagen, Plantagenkulturen, Grün- und Rasenflächen sowie Plätzen von Wohn- und Industrieanlagen, Gleisanlagen, besonders bevorzugt in monokotylen Kulturen wie Getreide, z.B. Weizen, Gerste, Roggen, Hafer, Kreuzungen davon wie Triticale, Reis, Mais und Hirse sowie dikotylen Kulturen wie Sonnenblumen, Soja, Kartoffel, Tomaten, Erbsen, Karotten und Fenchel, wobei man die Komponenten i) und ii) der erfindungsgemäßen herbiziden Zusammensetzungen gemeinsam oder getrennt, z.B. im Vorauflauf (sehr früh bis spät), Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Gegenstand der Erfindung ist auch die Verwendung der erfindungsgemäßen herbiziden Zusammensetzungen enthaltend die Komponenten i) und ii) zur Bekämpfung von Schadpflanzen, vorzugsweise in Pflanzenkulturen, vorzugsweise in den oben genannten Pflanzenkulturen. Weiterhin ist Gegenstand der Erfindung auch die Verwendung der erfindungsgemäßen herbiziden Zusammensetzungen enthaltend die Komponenten i) und ii) zur Bekämpfung von herbizid-resistenten Schadpflanzen (z.B. TSR und EMR Resistenzen bei ALS und ACCase), vorzugsweise in Pflanzenkulturen, vorzugsweise in den oben genannten Pflanzenkulturen.

Gegenstand der Erfindung ist auch das Verfahren mit den erfindungsgemäßen herbiziden Zusammensetzungen enthaltend die Komponenten i) und ii) zur selektiven Bekämpfung von Schadpflanzen in Pflanzenkulturen, vorzugsweise in den oben genannten Pflanzenkulturen, sowie dessen Verwendung.

Gegenstand der Erfindung ist auch das Verfahren zur Bekämpfung von unerwünschtem Pflanzenwuchs mit den erfindungsgemäßen herbiziden Zusammensetzungen enthaltend die Komponenten i) und ii), sowie dessen Verwendung, in Pflanzenkulturen, die gentechnisch verändert (transgen) oder durch Mutationsselektion erhalten wurden, und welche gegen Wuchsstoffe, wie z.B. 2,4 D, Dicamba oder gegen Herbizide, die essentielle Pflanzenenzyme, z.B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, oder gegen beliebige Kombinationen dieser Wirkstoffe, resistent sind. Besonders bevorzugt können die erfindungsgemäßen herbiziden Zusammensetzungen in transgenen Kulturpflanzen eingesetzt werden, die gegen eine Kombination von Glyphosaten und Glufosinaten, Glyphosaten und Sulfonylharnstoffen oder Imidazolinonen resistent sind. Ganz besonders bevorzugt können die erfindungsgemäßen herbiziden Zusammensetzungen in transgenen Kulturpflanzen wie z. B. Mais oder Soja mit dem Handelsnamen oder der Bezeichnung Optimum^{™} GAT^{™} (Glyphosate ALS Tolerant) eingesetzt werden.

Gegenstand der Erfindung ist auch die Verwendung der erfindungsgemäßen herbiziden Zusammensetzungen enthaltend die Komponenten i) und ii) zur Bekämpfung von Schadpflanzen, vorzugsweise in Pflanzenkulturen, vorzugsweise in den oben genannten Pflanzenkulturen.

Die erfindungsgemäßen herbiziden Zusammensetzungen können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen; oder selektiv zur Bekämpfung unerwünschten Pflanzenwuchses in Kulturen zur Energiegewinnung (Biogas, Bio-Ethanol) eingesetzt werden.

Die erfindungsgemäßen herbiziden Zusammensetzungen können sowohl als Mischformulierungen der Komponenten i) und ii) und gegebenenfalls mit weiteren agrochemischen Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Unter Umständen können die Mischformulierungen mit anderen Flüssigkeiten oder Feststoffen verdünnt oder auch unverdünnt angewendet werden.

Die erfindungsgemäßen Mischungen/Zusammensetzungen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wässrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen, Öldispersionen (OD), Suspoemulsionen (SE), Stäubemittel (DP), Beizmittel, Granulate zur Boden- oder Streuapplikation (GR) oder wasserdispergierbare Granulate (WG), Ultra-Low-Volume-Formulierungen, Mikrokapsel- oder Wachsdispersionen.

Die einzelnen Formulierungstypen sind im Prinzip bekannt und werden beispielsweise beschrieben in: "Manual on Development and Use of FAO and WHO Specifications for Pesticides", FAO and WHO, Rome, Italy, 2002; Winnacker-Küchler, "Chemische Technologie", Band 7, C. Hanser Verlag München, 4. Aufl. 1986; van Valkenburg, "Pesticide Formulations", Marcel Dekker N.Y. 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen agrochemischen Wirkstoffen, wie Fungizide, Insektizide, sowie Safener, Düngemittel und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben den Wirkstoffen außer einem oder mehreren Verdünnungs- oder Inertstoffen noch Tenside ionischer und/oder nichtionischer Art (Netzmittel, Dispergiermittel), z.B. polyoxethylierte Alkylphenole, polyethoxylierte Fettalkohole oder -Fettamine, Propylenoxid-Ethylenoxid-Copolymerisate, Alkansulfonate oder Alkylbenzolsulfonate oder Alkylnaphthalinsulfonaten, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen der Wirkstoffe in einem organischen Lösungsmittel oder Lösungsmittelgemisch, z.B. Butanol, Cyclohexanon, Dimethylformamid, Acetophenon, Xylol oder auch höhersiedenden Aromaten oder Kohlenwasserstoffe unter Zusatz von einem oder mehreren ionischen und/oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid- Copolymerisate, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate sind Wasser-basierte Suspensionen von Wirkstoffen. Sie können beispielsweise durch Nass-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Öldispersionen sind Öl-basierte Suspensionen von Wirkstoffen, wobei unter Öl jegliche organische Flüssigkeit zu verstehen ist, z. B. Pflanzenöle, aromatische oder aliphatische Lösemittel, oder Fettsäurealkylester. Sie können beispielsweise durch Nass-Vermahlung mittels handelsüblicher Perlmühlen und gegebenenfalls Zusatz von weiteren Tensiden (Netzmittel, Dispergiermittel), wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Emulsionen, z.B. Öl-in-Wasser-Emulsionen (EW), lassen sich beispielsweise mittels Rührern, Kolloidmühlen und/oder statischen Mischern aus Mischungen aus Wasser und mit Wasser nicht mischbaren organischen Lösungsmitteln und gegebenenfalls von weiteren Tensiden, wie sie z.B. oben bei den anderen Formulierungstypen bereits aufgeführt sind, herstellen. Die Wirkstoffe liegen hierbei in gelöster Form vor.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite, Kreide oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Herbizid-Komponenten, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Mischungen/Zusammensetzungen kann z.B. durch oberflächenaktive Substanzen verbessert werden, beispielsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die FettalkoholPolyglykolether können nichtionisch vorliegen, oder ionisch, z.B. in Form von Fettalkohol-Polyglykolethersulfaten oder -phosphaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische FettalkoholPolyglykolether sind beispielsweise 2 - 20, vorzugsweise 3 - 15, Ethylenoxideinheiten enthaltende (C₁₀-C₁₈)-, vorzugsweise (C₁₀-C₁₄)-Fettalkohol-Polyglykolether (z.B. Isotridecylalkohol-Polyglykolether) z.B. aus der Genapol^{®} X-Reihe wie Genapol^{®} X-030, Genapol^{®} X-060, Genapol^{®} X-080 oder Genapol^{®} X-150 (alle von Clariant GmbH).

Die vorliegende Erfindung umfasst ferner die Kombination der erfindungsgemäßen Mischungen/Zusammensetzungen mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkoholpolyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß FettalkoholPolyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Mischungen/Zusammensetzungen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerinoder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen herbiziden Mischungen/Zusammensetzungen z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Die vorliegende Erfindung umfasst in einer weiteren Ausführungsform Kombinationen der Komponenten i) und ii) mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten^{®}, Actirob^{®}B, Rako-Binol^{®}, Renol^{®} oder Stefes Mero^{®}.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Formulierungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mischungen mit den Komponenten i) und ii) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.A. Formulierungsbeispiele allgemeiner Art
a) Ein Stäubemittel wird erhalten, indem man 10 Gew.-Teile eines Wirkstoffs/Wirkstoffgemischs und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Ton als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbaren Suspensionskonzentrat wird erhalten, indem man 20 Gew.-Teile eines Wirkstoffs/Wirkstoffgemischs mit 5 Gew.-Teilen Tristyrylphenolpolyglykolether (Soprophor BSU), 1 Gew.-Teil Ligninsulfonat-Natrium (Vanisperse CB) und 74 Gew.-Teilen Wasser mischt und in einer Reibkugelmühle auf eine Feinheit von unter 5 Mikron vermahlt.
d) Eine in Wasser leicht verteilbare Öldispersion wird erhalten, indem man 20 Gew.-Teile eines Wirkstoffs/Wirkstoffgemischs mit 6 Gew.-Teilen Alkylphenolpolyglykolether (Triton^{®} X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.
e) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.
f) Ein in Wasser dispergierbares Granulat wird erhalten indem man
   75 Gew.-Teile eines Wirkstoffs/Wirkstoffgemischs,
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
g) Ein in Wasser dispergierbares Granulat wird auch erhalten, indem man
   25 Gew.-Teile eines Wirkstoffs/Wirkstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### a) Methodenbeschreibungen

### Gewächshausversuche

In der Standardversuchsdurchführung wurden die Samen unterschiedlicher Unkraut und Ungras Biotypen (Herkünfte) in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden auf einer Laborspritzbahn mit Spritzbrühen mit den erfindungsgemäßen Mischungen/Zusammensetzungen, Mischungen des Standes der Technik beziehungsweise mit den einzeln angewandten Komponenten behandelt. Die Applikation der als WG, WP, EC oder anders formulierten Wirkstoffe oder Wirkstoffkombinationen erfolgte zu den entsprechenden Wachstumsstadien der Pflanzen. Die Wasseraufwandmenge für die Spritzapplikation betrug 100-600 l/ha. Nach der Behandlung wurden die Pflanzen wieder in den Gewächshäusern aufgestellt.

Etwa 3 Wochen nach der Applikation wurde die Boden- oder/und Blattwirkung gemäß einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

(Anmerkungen: Der Begriff "Samen" umfasst auch vegetative Vermehrungsformen, wie z.B. Rhizomstücke; verwendete Abkürzungen: h Licht = Stunden Beleuchtungsdauer, g AS/ha = Gramm Aktivsubstanz je Hektar, l/ha = Liter je Hektar, S = sensitiv, R = resistent)
1. Unkrautwirkung im Vorauflauf: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
2. Unkrautwirkung im Nachauflauf: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16h Licht, Temperatur Tag 20-22°C, Nacht 15-18°C) bis zum Applikationszeitpunkt kultiviert. Die Töpfe wurden zu unterschiedlichen BBCH Stadien zwischen 11-25 der Samen/Pflanzen, d.h. in der Regel zwischen zwei bis drei Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
3. Unkrautwirkung im Vorauflauf mit und ohne Wirkstoffeinarbeitung: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät. Die Erde des Standardfeldbodens wird je nach Versuchsbedingungen steril oder nicht steril verwendet. Die Töpfe mit den Samen wurden im Vergleich entweder im BBCH Stadium 00-10 der Samen/Pflanzen, d.h. in der Regel zwischen zwei bis drei Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt, oder eine äquivalente Menge der erfindungsgemäßen Mischungen/Zusammensetzungen, Mischungen beziehungsweise der einzeln angewandten Komponenten als WG, WP, EC oder anderen Formulierungen wurden in die Deckschicht von 1cm eingearbeitet. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
4. Selektivitätswirkung im Vorauflauf: Samen unterschiedlicher Kulturarten (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.
5. Selektivitätswirkung im Nachauflauf: Samen unterschiedlicher Kulturarten (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 11-32 der Samen/Pflanzen, d.h. in der Regel zwischen zwei bis vier Wochen nach Beginn der Anzucht, auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert
6. Unkrautwirkung in der Vorsaatanwendung: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät. Die Erde des Standardfeldbodens wird je nach Versuchsbedingungen steril oder nicht steril verwendet. Die Töpfe mit den Samen wurden vor der Aussaat auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Aussaat wurden die Töpfe in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
7. Unkrautwirkung im Vor- und Nachauflauf bei unterschiedlichen Kultivierungsbedingungen: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die Bewässerung wurde entsprechend der Fragestellung variiert. Dabei wurden die einzelnen Vergleichsgruppen in Abstufungen in einem Bereich von oberhalb des PWP (permanenter Welkepunkt) und bis zum Niveau der maximalen Feldkapazität mit Wasser versorgt.
8. Unkrautwirkung im Vor- und Nachauflauf bei unterschiedlichen Bewässerungsbedingungen: Samen unterschiedlicher Unkraut und Ungras Biotypen (Herkünfte) wurden in einem mit natürlicher Erde eines Standardfeldbodens (lehmiger Schluff) gefüllten Topf von 8-13 cm Durchmesser ausgesät und mit einer Abdeckschicht des Bodens von etwa 1cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die einzelnen Vergleichsgruppen wurden dabei unterschiedlichen Bewässerungstechniken ausgesetzt. Die Bewässerung erfolgte entweder von unten oder in Abstufungen von oben (simulierte Beregnung).
9. Unkrautwirkung im Vor- und Nachauflauf bei unterschiedlichen Bodenbedingungen: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1cm abgedeckt. Für einen Vergleich der herbiziden Wirkung wurden die Pflanzen in unterschiedlichen Anzuchterden, von einem sandigen Boden bis schweren Tonboden und verschiedenen organischen Substanzgehalten, kultiviert. Die Anzuchterden werden je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
10.Unkrautwirkung im Vor- und Nachauflauf zur Bekämpfung resistenter Ungras- / Unkrautarten: Samen unterschiedlicher Unkraut und Ungras Biotypen (Herkünfte) mit unterschiedlichen Resistenzmechanismen gegenüber verschiedenen Wirkmechanismen wurden in einem mit natürlicher Erde eines Standardfeldbodens (lehmiger Schluff, LSI; pH 7.4; % C org 2,2) gefüllten Topf von 8 cm Durchmesser ausgesät und mit einer Abdeckschicht des Bodens von etwa 1 cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag ca. 23°C, Nacht ca. 15°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 300 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag ca. 23°C, Nacht ca. 15°C) kultiviert.
11. Unkrautwirkung und Kulturselektivität im Vor- und Nachauflauf bei unterschiedlichen Aussaatbedingungen: Samen unterschiedlicher Unkraut, Ungras Biotypen (Herkünfte) und Kulturarten (Herkünfte) wurden in einem mit natürlicher Erde gefüllten Topf von 8-13 cm Durchmesser ausgesät und mit einer Abdeckschicht des Bodens von etwa 0-5cm abgedeckt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.
12.Unkrautwirkung im Vor- und Nachauflauf bei unterschiedlichen pH-Werten des Bodens: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1cm abgedeckt. Für einen Vergleich der herbiziden Wirkung wurden die Pflanzen in Anzuchterden, von einem Standardfeldboden (lehmiger Schluff) mit unterschiedlichen pH-Werten von pH 7,4 und pH 8,4 kultiviert. Der Boden wurde entsprechend mit Kalk auf den höheren pH-Wert aufgemischt. Die Erde des Standardfeldbodens wird je nach Versuchsbedingungen steril oder nicht steril verwendet. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

### Feldversuche

In Feldversuchen wurden unter natürlichen Bedingungen bei praxisüblicher Feldvorbereitung und mit natürlicher oder künstlicher Verseuchung mit Schadpflanzen vor oder nach der Aussaat der Kulturpflanzen bzw. vor oder nach dem Auflaufen der Schadpflanzen die erfindungsgemäßen Mittel, Mischungen des Standes der Technik beziehungsweise die Einzelkomponenten appliziert und im Zeitraum von 4 Wochen bis 8 Monaten nach Behandlung im Vergleich zu unbehandelten Teilstücken (Parzellen) visuell bonitiert. Dabei wurden die Schädigungen der Kulturpflanzen und die Wirkung gegen Schadpflanzen prozentual erfasst, ebenso wie die weiteren Effekte der jeweiligen Versuchsfrage.

### b) Ergebnisse

### Folgende Methode wurde für die Ergebnisse verwendet:

Unkrautwirkung im Vorauflauf: Samen unterschiedlicher Unkraut und Ungras Biotypen (Herkünfte) wurden in einem mit natürlicher Erde eines Standardfeldbodens (lehmiger Schluff; gedämpft) gefüllten Topf von 8 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-06 der Samen auf einer Laborspritzbahn mit Spritzbrühen mit den erfindungsgemäßen Mischungen/Zusammensetzungen, Mischungen beziehungsweise mit den einzeln angewandten Komponenten als WG, WP, EC oder anderen Formulierungen behandelt. Die Wasseraufwandmenge für die Spritzapplikation betrug 300 l/ha. Nach der Behandlung wurden die Pflanzen wieder in den Gewächshäusern aufgestellt und nach Bedarf gedüngt und bewässert.

Folgende Abkürzungen wurden verwendet:
BBCH = BBCH-Code gibt Auskunft über das morphologische Entwicklungsstadium einer Pflanze. Die Abkürzung steht offiziell für die Biologische Bundesanstalt, Bundessortenamt und Chemische Industrie. Der Bereich von BBCH 00-10 steht für die Stadien der Keimung der Samen bis zum Durchstoßen der Oberfläche. Der Bereich von BBCH 11-25 steht für die Stadien der Blattentwicklung bis zur Bestockung (entsprechend Anzahl der Bestockungstriebe bzw. Seitensprosse).
PE = Vorauflaufapplikation auf den Boden; BBCH der Samen/Pflanzen 00-10.
PO = Nachauflaufapplikation auf die grünen Pflanzenteile; BBCH der Pflanzen 11-25.
HRAC = 'Herbicide Resistance Action Committee', welches die zugelassenen Wirkstoffe nach ihrem Wirkmechanismus (syn. 'Mode of Action'; MoA) einteilt.
HRAC Gruppe A = Acetylcoenzym-A-Carboxylase Inhibitoren (MoA: ACCase).
HRAC Gruppe B = Acetolactatsynthase Inhibitoren (MoA: ALS).
AS = Aktivsubstanz (bezogen auf 100% Wirkstoff; syn. a.i. (englisch)).
Dosis g AS/ha = Aufwandmenge in Gramm Aktivsubstanz pro Hektar.

Folgende Unkraut und Ungras Biotypen wurden in den Versuchen verwendet:
ALOMY - sensitiv(*Alopecurus myosuroides*) Sensitiv gegenüber den gängigen herbiziden Wirkstoffen.
ALOMY - resistent (*Alopecurus myosuroides*) Resistent gegenüber herbiziden Wirkstoffen.der HRAC Gruppe A und B; Populationsgemisch aus einer Feldherkunft mit erhöhter metabolischer Resistenz (EMR) und einem Anteil Target Site Resistenz (TSR).
LOLRI - sensitiv (*Lolium rigidum*) Sensitiv gegenüber den gängigen herbiziden Wirkstoffen.
LOLRI - resistent (*Lolium rigidum*) Resistent gegenüber herbiziden Wirkstoffen.der HRAC Gruppe A und B; Populationsgemisch aus einer Feldherkunft mit erhöhter metabolischer Resistenz (EMR) und einem Anteil Target Site Resistenz (TSR).
AVEFA (*Avena fatua*) - Wild oat
BROST (*Bromus sterilis*) - Bromegrass, barren
SORHA (*Sorghum halepense*) - Johnsongrass
BRSNW (*Brassica napus*) - Rape, winter
CENCY (*Centaurea cyanus*) - Cornflower
EMEAU (*Emex australis*) - Cathead
GALAP (*Gallium aparine*) - Cleaver
PAPRH (Papaver rhoeas) - Poppy, common
RAPRA (*Raphanus raphanistrum*) - Charlock, jointed
VERHE (*Veronica hederaefolia*) - Speedwell, iveleaf
HORVS (*Hordeum vulgare*) - Barley, spring
TRZAS (*Triticum aestivum*) - Wheat, spring

Die Wirkungen der erfindungsgemäßen herbiziden Zusammensetzungen entsprechen den gestellten Anforderungen und lösen damit die Aufgabe der Verbesserung des Anwendungsprofils des herbiziden Wirkstoffs 2-[(2,4-Dichlorphenyl)methyl]-4,4-dimethyl-3-isoxazolidinon (u.a. Bereitstellung flexiblerer Lösungen in Bezug auf notwendige Aufwandmengen bei gleichbleibender bis gesteigerter Wirksamkeit).

Soweit herbizide Effekte der erfindungsgemäßen Mittel im Vergleich mit Mischungen des Standes der Technik beziehungsweise mit einzeln angewendeten Komponenten gegen wirtschaftlich bedeutende mono- und dikotyle Schadpflanzen im Focus standen, wurden die synergistischen herbiziden Wirkungen anhand der 'Colby-Formel' (vgl. S.R. Colby; Weeds 15 (1967), 20-22) berechnet:

**Tabelle 1**

| | Dose in g AS/ha | ALOM Y Sensitiv | ALOM Y Resisten t | LOLRI Sensiti v | LOLRI Resisten t | AVEF A | BROS T | PAPR H |
|---|---|---|---|---|---|---|---|---|
| 2-[(2,4-Dichlorphenyl) -methyl]-4,4-dimethyl-3-isoxazolidinon | 500 | 95 | 95 | 95 | 94 | 80 | 75 | 95 |
| Cinmethylin | 50 | 80 | 70 | 90 | 85 | 0 | 50 | 0 |
| 2-[(2,4-Dichlorphenyl) -methyl]-4,4-dimethyl-3-isoxazolidinon + Cinmethylin | 500+5 0 | 100 | 99 | 99 | 100 | 95 | 95 | 99 |
| Erwarted nach COLBY | - | 99 | 99 | 100 | 99 | 80 | 88 | 95 |
| Synergismus | - | 1 | 1 | -1 | 1 | 15 | 8 | 4 |
| | | | | | | | | |

| | Dose in g AS/ha | VERHE | EMEAU | RAPRA | BRSNW | | TRZAS | HORVS |
|---|---|---|---|---|---|---|---|---|
| 2-[(2,4-Dichlorphenyl)-methyl]-4,4-dimethyl-3-isoxazolidinon | 500 | 95 | 70 | 90 | 20 | | 70 | 60 |
| Cinmethylin | 50 | 0 | 0 | 0 | 0 | | 30 | 30 |
| 2-[(2,4-Dichlorphenyl)-methyl]-4,4-dimethyl-3-isoxazolidinon + Cinmethylin | 500+50 | 98 | 95 | 95 | 20 | | 80 | 95 |
| Erwarted nach COLBY | - | 95 | 70 | 90 | 20 | | 72 | 20 |
| Synergismus | - | 3 | 25 | 5 | 0 | | 1 | 23 |

**Tabelle 2**

| | Dose in g AS/ha | ALOM Y Sensitiv | ALOM Y Resisten t | LOLRI Sensiti v | LOLRI Resisten t | AVEF A | BROS T | PAPR H |
|---|---|---|---|---|---|---|---|---|
| 2-[(2,4-Dichlorphenyl) -methyl]-4,4-dimethyl-3-isoxazolidinon | 400 | 95 | 95 | 95 | 94 | 75 | 70 | 95 |
| Cinmethylin | 10 | 0 | 0 | 0 | 0 | 0 | 0 | 0 |
| 2-[(2,4-Dichlorphenyl) -methyl]-4,4-dimethyl-3-isoxazolidinon + Cinmethylin | 400+1 0 | 100 | 98 | 100 | 100 | 85 | 78 | 99 |
| Erwarted nach COLBY | - | 95 | 95 | 95 | 94 | 75 | 70 | 95 |
| Synergismus | - | 5 | 3 | 5 | 6 | 10 | 8 | 4 |
| | | | | | | | | |

| | Dose in g AS/ha | VERHE | EMEAU | RAPRA | BRSNW | | TRZAS | HORVS |
|---|---|---|---|---|---|---|---|---|
| 2-[(2,4-Dichlorphenyl)-methyl]-4,4-dimethyl-3-isoxazolidinon | 400 | 95 | 70 | 80 | 20 | | 60 | 60 |
| Cinmethylin | 10 | 0 | 0 | 0 | 0 | | 0 | 0 |
| 2-[(2,4-Dichlorphenyl)-methyl]-4,4-dimethyl-3-isoxazolidinon + Cinmethylin | 400+10 | 97 | 70 | 80 | 30 | | 80 | 95 |
| Erwarted nach COLBY | - | 95 | 70 | 80 | 20 | | 60 | 60 |
| Synergismus | - | 2 | 0 | 0 | 10 | | 20 | 35 |

**Tabelle 3**

| | Dose in g AS/ha | ALOM Y Sensitiv | ALOM Y Resisten t | LOLRI Sensiti v | LOLRI Resisten t | AVEF A | BROS T | PAPR H |
|---|---|---|---|---|---|---|---|---|
| 2-[(2,4-Dichlorphenyl) -methyl]-4,4-dimethyl-3-isoxazolidinon | 400 | 95 | 95 | 95 | 94 | 75 | 70 | 95 |
| Cinmethylin | 25 | 80 | 60 | 70 | 70 | 0 | 20 | 0 |
| 2-[(2,4-Dichlorphenyl) -methyl]-4,4-dimethyl-3-isoxazolidinon + Cinmethylin | 400+2 5 | 100 | 98 | 98 | 99 | 93 | 95 | 98 |
| Erwarted nach COLBY | - | 99 | 98 | 99 | 98 | 75 | 76 | 95 |
| Synergismus | - | 1 | 0 | -1 | 1 | 18 | 19 | 3 |
| | | | | | | | | |

| | Dose in g AS/ha | VERHE | EMEAU | RAPRA | BRSNW | | TRZAS | HORVS |
|---|---|---|---|---|---|---|---|---|
| 2-[(2,4-Dichlorphenyl)-methyl]-4,4-dimethyl-3-isoxazolidinon | 400 | 95 | 70 | 80 | 20 | | 60 | 60 |
| Cinmethylin | 25 | 0 | 0 | 0 | 0 | | 0 | 0 |
| 2-[(2,4-Dichlorphenyl)-methyl]-4,4-dimethyl-3-isoxazolidinon + Cinmethylin | 400+25 | 98 | 75 | 80 | 20 | | 80 | 75 |
| Erwarted nach COLBY | - | 95 | 70 | 80 | 20 | | 60 | 60 |
| Synergismus | - | 3 | 5 | 0 | 0 | | 20 | 15 |

**Tabelle 4**

| | Dose in g AS/ha | ALOM Y Sensitiv | ALOM Y Resisten t | LOLRI Sensiti v | LOLRI Resisten t | AVEF A | BROS T | PAPR H |
|---|---|---|---|---|---|---|---|---|
| 2-[(2,4-Dichlorphenyl) -methyl]-4,4-dimethyl-3-isoxazolidinon | 250 | 93 | 93 | 95 | 80 | 75 | 65 | 95 |
| Cinmethylin | 25 | 80 | 60 | 70 | 70 | 0 | 20 | 0 |
| 2-[(2,4-Dichlorphenyl) -methyl]-4,4-dimethyl-3-isoxazolidinon + Cinmethylin | 250+2 5 | 100 | 95 | 98 | 93 | 85 | 80 | 98 |
| Erwarted nach COLBY | - | 99 | 97 | 99 | 94 | 75 | 72 | 95 |
| Synergismus | - | 1 | -2 | -1 | -1 | 10 | 8 | 3 |
| | | | | | | | | |

| | Dose in g AS/ha | VERHE | EMEAU | RAPRA | BRSNW | | TRZAS | HORVS |
|---|---|---|---|---|---|---|---|---|
| 2-[(2,4-Dichlorphenyl)-methyl]-4,4-dimethyl-3-isoxazolidinon | 250 | 95 | 60 | 60 | 20 | | 50 | 50 |
| Cinmethylin | 25 | 0 | 0 | 0 | 0 | | 0 | 0 |
| 2-[(2,4-Dichlorphenyl)-methyl]-4,4-dimethyl-3-isoxazolidinon + Cinmethylin | 250+25 | 97 | 65 | 80 | 10 | | 40 | 70 |
| Erwarted nach COLBY | - | 95 | 60 | 60 | 20 | | 50 | 50 |
| Synergismus | - | 2 | 5 | 20 | -10 | | -10 | 20 |

**Tabelle 5**

| | Dose in g AS/ha | ALOM Y Sensitiv | ALOM Y Resisten t | LOLRI Sensiti v | LOLRI Resisten t | AVEF A | BROS T | SORH A |
|---|---|---|---|---|---|---|---|---|
| 2-[(2,4-Dichlorphenyl) | | 20 | 10 | 70 | 60 | 15 | 0 | 30 |
| -methyl]-4,4-dimethyl-3-isoxazolidinon | 50 | | | | | | | |
| Cinmethylin | 500 | 100 | 100 | 100 | 100 | 70 | 100 | 100 |
| 2-[(2,4-Dichlorphenyl) -methyl]-4,4-dimethyl-3-isoxazolidinon + Cinmethylin | 50+50 0 | 100 | 100 | 100 | 100 | 85 | 100 | 95 |
| Erwarted nach COLBY | - | 100 | 100 | 100 | 100 | 75 | 100 | 100 |
| Synergismus | - | 0 | 0 | 0 | 0 | 11 | 0 | -5 |
| | | | | | | | | |
| | Dose in g AS/ha | CENC Y | VERH E | EMEA U | RAPR A | BRSN W | TRZA S | HORV S |
| 2-[(2,4-Dichlorphenyl) -methyl]-4,4-dimethyl-3-isoxazolidinon | 50 | 10 | 70 | 10 | 20 | 0 | 0 | 5 |
| Cinmethylin | 500 | 80 | 0 | 0 | 40 | 10 | 90 | 70 |
| 2-[(2,4-Dichlorphenyl) -methyl]-4,4-dimethyl-3-isoxazolidinon + Cinmethylin | 50+50 0 | 70 | 97 | 40 | 60 | 50 | 80 | 90 |
| Erwarted nach COLBY | - | 82 | 70 | 10 | 52 | 10 | 90 | 72 |
| Synergismus | - | -12 | 27 | 30 | 8 | 40 | -10 | 19 |

**Tabelle 6**

| | Dose in g AS/ha | ALOM Y Sensitiv | ALOM Y Resisten t | LOLRI Sensiti v | LOLRI Resisten t | AVEF A | BROS T | SORH A |
|---|---|---|---|---|---|---|---|---|
| 2-[(2,4-Dichlorphenyl) -methyl]-4,4-dimethyl-3-isoxazolidinon | 25 | 0 | 0 | 30 | 5 | 5 | 0 | 0 |
| Cinmethylin | 250 | 100 | 90 | 100 | 100 | 50 | 100 | 80 |
| 2-[(2,4-Dichlorphenyl) -methyl]-4,4-dimethyl-3-isoxazolidinon + Cinmethylin | 25+25 0 | 100 | 100 | 100 | 100 | 75 | 100 | 90 |
| Erwarted nach COLBY | - | 100 | 90 | 100 | 100 | 53 | 100 | 80 |
| Synergismus | - | 0 | 10 | 0 | 0 | 23 | 0 | 10 |
| | | | | | | | | |
| | Dose in g AS/ha | CENC Y | VERH E | EMEA U | RAPR A | BRSN W | TRZA S | HORV S |
| 2-[(2,4-Dichlorphenyl) -methyl]-4,4-dimethyl-3-isoxazolidinon | 25 | 0 | 40 | 0 | 5 | 0 | 0 | 2 |
| Cinmethylin | 250 | 30 | 0 | 0 | 30 | 0 | 75 | 65 |
| 2-[(2,4-Dichlorphenyl) -methyl]-4,4-dimethyl-3-isoxazolidinon + Cinmethylin | 25+25 0 | 90 | 95 | 40 | 40 | 20 | 75 | 75 |
| Erwarted nach COLBY | - | 30 | 40 | 0 | 34 | 0 | 75 | 66 |
| Synergismus | - | 60 | 55 | 40 | 7 | 20 | 0 | 9 |

**Tabelle 7**

| | Dose in g AS/ha | ALOM Y Sensitiv | ALOM Y Resisten t | LOLRI Sensiti v | LOLRI Resisten t | AVEF A | BROS T | SORH A |
|---|---|---|---|---|---|---|---|---|
| 2-[(2,4-Dichlorphenyl) -methyl]-4,4-dimethyl-3-isoxazolidinon | 10 | 0 | 0 | 0 | 0 | 0 | 0 | 0 |
| Cinmethylin | 500 | 100 | 100 | 100 | 100 | 70 | 100 | 100 |
| 2-[(2,4-Dichlorphenyl) -methyl]-4,4-dimethyl-3-isoxazolidinon + Cinmethylin | 10+50 0 | 100 | 100 | 100 | 100 | 80 | 100 | 100 |
| Erwarted nach COLBY | - | 100 | 100 | 100 | 100 | 70 | 100 | 100 |
| Synergismus | - | 0 | 0 | 0 | 0 | 10 | 0 | 0 |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 10 | 0 | 15 | 0 | 0 | 0 | 0 | 0 |
| Cinmethylin | 500 | 80 | 0 | 0 | 40 | 10 | 90 | 70 |
| 2-[(2,4-Dichlorphenyl) -methyl]-4,4-dimethyl-3-isoxazolidinon + Cinmethylin | 10+50 0 | 90 | 90 | 0 | 40 | 15 | 90 | 95 |
| Erwarted nach COLBY | - | 80 | 15 | 0 | 40 | 10 | 90 | 70 |
| Synergismus | - | 10 | 75 | 0 | 0 | 5 | 0 | 25 |

**Tabelle 8**

| | Dose in g AS/ha | ALOM Y Sensitiv | ALOM Y Resisten t | LOLRI Sensiti v | LOLRI Resisten t | AVEF A | BROS T | SORH A |
|---|---|---|---|---|---|---|---|---|
| 2-[(2,4-Dichlorphenyl) -methyl]-4,4-dimethyl-3-isoxazolidinon | 10 | 0 | 0 | 0 | 0 | 0 | 0 | 0 |
| Cinmethylin | 250 | 100 | 90 | 100 | 100 | 50 | 100 | 80 |
| 2-[(2,4-Dichlorphenyl) -methyl]-4,4-dimethyl-3-isoxazolidinon + Cinmethylin | 10+25 0 | 100 | 100 | 100 | 100 | 65 | 100 | 90 |
| Erwarted nach COLBY | - | 100 | 90 | 100 | 100 | 50 | 100 | 80 |
| Synergismus | - | 0 | 10 | 0 | 0 | 15 | 0 | 10 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 10 | 0 | 15 | 0 | 0 | 0 | 0 | 0 |
| Cinmethylin | 250 | 30 | 0 | 0 | 30 | 0 | 75 | 65 |
| 2-[(2,4-Dichlorphenyl) -methyl]-4,4-dimethyl-3-isoxazolidinon + Cinmethylin | 10+25 0 | 90 | 50 | 0 | 30 | 15 | 65 | 95 |
| Erwarted nach COLBY | - | 30 | 15 | 0 | 30 | 0 | 75 | 65 |
| Synergismus | - | 60 | 35 | 0 | 0 | 15 | -10 | 30 |

**Tabelle 9**

| | Dose in g AS/ha | ALOM Y Sensitiv | ALOM Y Resisten t | LOLRI Sensiti v | LOLRI Resisten t | AVEF A | BROS T | SORH A |
|---|---|---|---|---|---|---|---|---|
| 2-[(2,4-Dichlorphenyl) -methyl]-4,4-dimethyl-3-isoxazolidinon | 10 | 0 | 0 | 0 | 0 | 0 | 0 | 0 |
| Cinmethylin | 100 | 90 | 70 | 100 | 100 | 25 | 100 | 70 |
| 2-[(2,4-Dichlorphenyl) -methyl]-4,4-dimethyl-3-isoxazolidinon + Cinmethylin | 10+10 0 | 100 | 100 | 100 | 100 | 25 | 100 | 85 |
| Erwarted nach COLBY | - | 90 | 70 | 100 | 100 | 25 | 100 | 70 |
| Synergismus | - | 10 | 30 | 0 | 0 | 0 | 0 | 15 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 10 | 0 | 15 | 0 | 0 | 0 | 0 | 0 |
| Cinmethylin | 100 | 0 | 0 | 0 | 0 | 0 | 40 | 40 |
| 2-[(2,4-Dichlorphenyl) -methyl]-4,4-dimethyl-3-isoxazolidinon + Cinmethylin | 10+10 0 | 93 | 10 | 0 | 30 | 15 | 40 | 50 |
| Erwarted nach COLBY | - | 0 | 15 | 0 | 0 | 0 | 40 | 40 |
| Synergismus | - | 93 | -5 | 0 | 30 | 15 | 0 | 10 |

**Tabelle 10**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl)-methyl]-4,4-dimethyl-3-isoxazolidinon | 100 | 60 | 60 | 70 | 70 | 50 | 20 | 40 |
| Cinmethylin | 100 | 90 | 70 | 100 | 100 | 25 | 100 | 70 |
| 2-[(2,4- ' Dichlorphenyl)-methyl]-4,4-dimethyl-3-isoxazolidinon + Cinmethylin | 100+100 | 100 | 99 | 100 | 100 | 80 | 95 | 100 |
| Erwarted nach COLBY | - | 96 | 88 | 100 | 100 | 63 | 100 | 82 |
| Synergismus | - | 4 | 11 | 0 | 0 | 18 | -5 | 18 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 100 | 70 | 80 | 20 | 40 | 0 | 5 | 15 |
| Cinmethylin | 100 | 0 | 0 | 0 | 0 | 0 | 40 | 40 |
| 2-[(2,4- ' Dichlorphenyl) -methyl]-4,4-dimethyl-3-isoxazolidinon + Cinmethylin | 100+10 0 | 88 | 100 | 60 | 60 | 30 | 20 | 65 |
| Erwarted nach COLBY | - | 70 | 80 | 20 | 40 | 0 | 43 | 49 |
| Synergismus | - | 18 | 20 | 40 | 20 | 30 | -23 | 16 |

**Tabelle 11**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl)-methyl]-4,4-dimethyl-3-isoxazolidinon | 200 | 95 | 80 | 90 | 80 | 70 | 30 | 60 |
| Cinmethylin ' | 100 | 90 | 70 | 100 | 100 | 25 | 100 | 70 |
| 2-[(2,4-Dichlorphenyl)-methyl]-4,4-dimethyl-3-isoxazolidinon + Cinmethylin | 200+100 | 100 | 99 | 100 | 100 | 75 | 96 | 95 |
| Erwarted nach COLBY | - | 100 | 94 | 100 | 100 | 78 | 100 | 88 |
| Synergismus | - | 1 | 5 | 0 | 0 | -3 | -4 | 7 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 200 | 88 | 90 | 40 | 50 | 5 | 40 | 40 |
| Cinmethylin | 100 | 0 | 0 | 0 | 0 | 0 | 40 | 40 |
| 2-[(2,4-Dichlorphenyl) -methyl]-4,4-dimethyl-3-isoxazolidinon + Cinmethylin | 200+10 0 | 95 | 99 | 80 | 60 | 20 | 50 | 70 |
| Erwarted nach COLBY | - | 88 | 90 | 40 | 50 | 5 | 64 | 64 |
| Synergismus | - | 7 | 9 | 40 | 10 | 15 | -14 | 6 |

**Tabelle 12**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl)-methyl]-4,4-dimethyl-3-isoxazolidinon | 100 | 60 | 60 | 70 | 70 | 50 | 20 | 40 |
| Cinmethylin | 50 | 80 | 70 | 90 | 85 | 0 | 50 | 65 |
| 2-[(2,4-Dichlorphenyl)-methyl]-4,4-dimethyl-3-isoxazolidinon + Cinmethylin | 100+50 | 100 | 100 | 97 | 100 | 70 | 93 | 90 |
| Erwarted nach COLBY | - | 92 | 88 | 97 | 96 | 50 | 60 | 79 |
| Synergismus | - | 8 | 12 | 0 | 5 | 20 | 33 | 11 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 100 | 70 | 80 | 20 | 40 | 0 | 5 | 15 |
| Cinmethylin | 50 | 0 | 0 | 0 | 0 | 0 | 30 | 30 |
| 2-[(2,4-Dichlorphenyl) -methyl]-4,4-dimethyl-3-isoxazolidinon + Cinmethylin | 100+5 0 | 85 | 98 | 60 | 50 | 20 | 30 | 30 |
| Erwarted nach COLBY | - | 70 | 80 | 20 | 40 | 0 | 34 | 41 |
| Synergismus | - | 15 | 18 | 40 | 10 | 20 | -4 | -11 |

**Tabelle 13**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl)-methyl]-4,4-dimethyl-3-isoxazolidinon | 50 | 20 | 20 | 70 | 30 | 15 | 0 | 30 |
| Cinmethylin | 100 | 90 | 70 | 100 | 100 | 25 | 100 | 70 |
| 2-[(2,4-Dichlorphenyl)-methyl]-4,4-dimethyl-3-isoxazolidinon + Cinmethylin | 50+100 | 100 | 100 | 100 | 100 | 70 | 90 | 90 |
| Erwarted nach COLBY | - | 92 | 76 | 100 | 100 | 36 | 100 | 79 |
| Synergismus | - | 8 | 24 | 0 | 0 | 34 | -10 | 11 |
| | | | | | | | | |

| | Dose in g AS/ha | CENC Y | VERH E | EMEA U | RAPR A | BRSN W | TRZA S | HORV S |
|---|---|---|---|---|---|---|---|---|
| 2-[(2,4-Dichlorphenyl) -methyl]-4,4-dimethyl-3-isoxazolidinon | 50 | 10 | 70 | 10 | 20 | 0 | 0 | 5 |
| Cinmethylin | 100 | 0 | 0 | 0 | 0 | 0 | 40 | 40 |
| 2-[(2,4-Dichlorphenyl) -methyl]-4,4-dimethyl-3-isoxazolidinon + Cinmethylin | 50+10 0 | 85 | 100 | 60 | 40 | 20 | 20 | 25 |
| Erwarted nach COLBY | - | 10 | 70 | 10 | 20 | 0 | 40 | 43 |
| Synergismus | - | 75 | 30 | 50 | 20 | 20 | -20 | -18 |

**Tabelle 14**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl) -methyl]-4,4-dimethyl-3-isoxazolidinon | 100 | 60 | 60 | 70 | 75 | 50 | 20 | 40 |
| Cinmethylin | 50 | 80 | 70 | 90 | 100 | 0 | 50 | 65 |
| Mefenpyr | **300** | 0 | 0 | 0 | 0 | 0 | 0 | 0 |
| 2-[(2,4-Dichlorphenyl) -methyl]-4,4-dimethyl-3-isoxazolidinon + | 100+ 50+ **300** | 100 | 90 | 98 | 100 | 55 | 90 | 80 |
| Cinmethylin + Mefenpyr | | | | | | | | |
| Erwarted nach COLBY | - | 92 | 88 | 97 | 100 | 50 | 60 | 79 |
| Synergismus | - | 8 | 2 | 1 | 0 | 5 | 30 | 1 |
| | | | | | | | | |

| | Dose in g AS/ha | CENCY | VERHE | EMEA U | RAPRA | BRSNW | TRZAS | HORVS |
|---|---|---|---|---|---|---|---|---|
| 2-[(2,4-Dichlorphenyl) methyl]-4,4-dimethyl-3-isoxazolidinon | 100 | 70 | 80 | 20 | 40 | 0 | 5 | 15 |
| Cinmethylin | 50 | 0 | 0 | 0 | 0 | 0 | 30 | 30 |
| Mefenpyr | **300** | 0 | 0 | 0 | 0 | 0 | 0 | 0 |
| 2-[(2,4-Dichlorphenyl)-methyl]-4,4-dimethyl-3-isoxazolidinon + Cinmethylin + Mefenpyr | 100+ 50+ **300** | 70 | 97 | 75 | 85 | 10 | 0 | 5 |
| Erwarted nach COLBY | - | 70 | 80 | 20 | 40 | 0 | 34 | 41 |
| Synergismus | - | 0 | 17 | 55 | 45 | 10 | -34 | -36 |

**Tabelle 15**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl) -methyl]-4,4-dimethyl-3-isoxazolidinon | 100 | 60 | 60 | 70 | 75 | 50 | 20 | 40 |
| Cinmethylin | 50 | 80 | 70 | 90 | 100 | 0 | 50 | 65 |
| Mefenpyr | **100** | 0 | 0 | 0 | 0 | 0 | 0 | 0 |
| 2-[(2,4-Dichlorphenyl) -methyl]-4,4-dimethyl-3-isoxazolidinon + Cinmethylin + Mefenpyr | 100+ 50+ **100** | 99 | 95 | 95 | 99 | 60 | 90 | 80 |
| Erwarted nach COLBY | - | 92 | 88 | 97 | 100 | 50 | 60 | 79 |
| Synergismus | - | 7 | 7 | -2 | -1 | 10 | 30 | 1 |
| | | | | | | | | |

| | Dose in g AS/ha | CENCY | VERHE | EMEA U | RAPRA | BRSNW | TRZAS | HORVS |
|---|---|---|---|---|---|---|---|---|
| 2-[(2,4-Dichlorphenyl) methyl]-4,4-dimethyl-3-isoxazolidinon | 100 | 70 | 80 | 20 | 40 | 0 | 5 | 15 |
| Cinmethylin | 50 | 0 | 0 | 0 | 0 | 0 | 30 | 30 |
| Mefenpyr | **100** | 0 | 0 | 0 | 0 | 0 | 0 | 0 |
| 2-[(2,4-Dichlorphenyl)-methyl]-4,4-dimethyl-3-isoxazolidinon + Cinmethylin + Mefenpyr | 100+ 50+ **100** | 99 | 97 | 75 | 90 | 5 | 5 | 10 |
| Erwarted nach COLBY | - | 70 | 80 | 20 | 40 | 0 | 34 | 41 |
| Synergismus | - | 29 | 17 | 55 | 50 | 5 | -29 | -31 |

**Tabelle 16**

| | Dose in g AS/ha | ALOMY Sensitiv | ALOMY Resistent | LOLRI Sensitiv | LOLRI Resistent | AVEFA | BROST | SORHA |
|---|---|---|---|---|---|---|---|---|
| 2-[(2,4-Dichlorphenyl) -methyl]-4,4-dimethyl-3-isoxazolidinon | 100 | 60 | 60 | 70 | 75 | 50 | 20 | 40 |
| Cinmethylin | 50 | 80 | 70 | 90 | 100 | 0 | 50 | 65 |
| Mefenpyr | **10** | 0 | 0 | 0 | 0 | 0 | 0 | 0 |
| 2-[(2,4-Dichlorphenyl) -methyl]-4,4-dimethyl-3-isoxazolidinon + Cinmethylin + Mefenpyr | 100+ 50+ **10** | 100 | 100 | 100 | 100 | 60 | 70 | 98 |
| Erwarted nach COLBY | - | 92 | 88 | 97 | 100 | 50 | 60 | 79 |
| Synergismus | - | 8 | 12 | 3 | 0 | 10 | 10 | 19 |
| | | | | | | | | |

| | Dose in g AS/ha | CENCY | VERHE | EMEA U | RAPRA | BRSNW | TRZAS | HORVS |
|---|---|---|---|---|---|---|---|---|
| 2-[(2,4-Dichlorphenyl) methyl]-4,4-dimethyl-3-isoxazolidinon | 100 | 70 | 80 | 20 | 40 | 0 | 5 | 15 |
| Cinmethylin | 50 | 0 | 0 | 0 | 0 | 0 | 30 | 30 |
| Mefenpyr | 10 | 0 | 0 | 0 | 0 | 0 | 0 | 0 |
| 2-[(2,4-Dichlorphenyl)-methyl]-4,4-dimethyl-3-isoxazolidinon + Cinmethylin + Mefenpyr | 100+ 50+ **10** | 93 | 97 | 75 | 50 | 5 | 5 | 20 |
| Erwarted nach COLBY | - | 70 | 80 | 20 | 40 | 0 | 34 | 41 |
| Synergismus | - | 23 | 17 | 55 | 10 | 5 | -29 | -21 |

## Patentansprüche

1. Herbizide Mischung, enthaltend
i) 2-[(2,4-Dichlorphenyl)methyl]-4,4-dimethyl-3-isoxazolidinon,
ii) Cinmethylin
und
mindestens ein weiteres Herbizid aus der Gruppe I:
Acetochlor, Acifluorfen, Acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, -dimethylammonium, -diolamin, -ethyl, 2-ethylhexyl, -isobutyl, -isooctyl, - isopropylammonium, -potassium, -triisopropanolammonium und -trolamine, 2,4-DB, 2,4-DB-butyl, -dimethylammonium, isooctyl, -potassium und -sodium, daimuron (dymron), dalapon, dazomet, n-decanol, desmedipham, detosyl-pyrazolate (DTP), dicamba, dichlobenil, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, -potassium, -sodium und -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyr-isopropylammonium, imazaquin, imazaquinammonium, imazethapyr, imazethapyr-immonium, imazosulfuron, indanofan, indaziflam, iodosulfuron, iodosulfuron-methyl-sodium, ioxynil, ioxynil-octanoate, -potassium und sodium, ipfencarbazone, isoproturon, isouron, isoxaben, isoxaflutole, karbutilate, KUH-043, i.e. 3-({[5-(Difluormethyl)-1-methyl-3 -(trifluormethyl)- 1H-pyrazol-4-yl]methyl } sulfonyl)-5,5-dimethyl-4,5-dihydro-1,2-oxazol, ketospiradox, lactofen, lenacil, linuron, MCPA, MCPA-butotyl, - dimethylammonium, -2-ethylhexyl, -isopropylammonium, -potassium und -sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen: 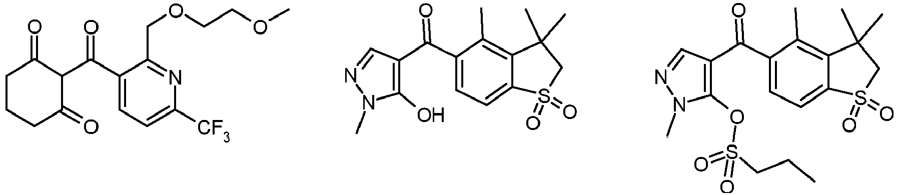 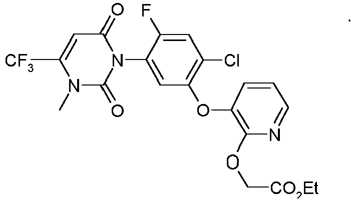
und/oder mindestens einen Safener, wobei die Aufwandmenge, sofern die Zusammensetzung einen Safener enthält, im allgemeinen 5-2000 g AS/ha, vorzugsweise 10-500 g AS/ha und besonders bevorzugt 10-300 g AS/ha beträgt.

2. Herbizide Mischung nach Anspruch 1 enthaltend mindestens einen Safener aus der Gruppe bestehend aus: Cloquintocet-mexyl, Cyprosulfamid, Isoxadifen-ethyl und Mefenpyr-diethyl.

3. Herbizide Mischung nach einem der Ansprüche 1 bis 2, worin die Herbizid-Komponenten im nachstehend angegebenen Gewichtsverhältnis zueinander stehen:
(Bereich Komponente i) : (Bereich Komponente ii)
im allgemeinen(1-1000):(1 - 1000), vorzugsweise(1-100):(1 - 100), besonders bevorzugt (1-50):(1 - 50).

4. Herbizide Mischung nach einem der Ansprüche 1 bis 3, enthaltend für die jeweiligen Herbizid-Komponenten nachstehend angegebenen Aufwandmengen:
Komponente i): im allgemeinen 1 - 2000 g AS/ha, vorzugsweise 10 - 1000 g AS/ha, besonders bevorzugt 10 - 500 g AS/ha 2-[(2,4-Dichlorphenyl)methyl]-4,4-dimethyl-3-isoxazolidinon;
Komponente ii): im allgemeinen 1 - 2000 g AS/ha, vorzugsweise 10 - 1000 g AS/ha, besonders bevorzugt 10 - 500 g AS/ha Cinmethylin.

5. Herbizide Mischung nach einem der Ansprüche 1 bis 4, zusätzlich enthaltend im Pflanzenschutz übliche Zusatzstoffe und/oder Formulierungshilfsmittel.

6. Herbizide Zusammensetzung enthaltend eine Mischung nach einem der Ansprüche 1 bis 5, zusätzlich enthaltend eine oder mehrere weitere Komponenten aus der Gruppe agrochemischer Wirkstoffe umfassend Insektizide und Fungizide.

7. Verfahren zur Bekämpfung von unerwünschtem Pflanzenwuchs, worin die Komponenten i) und
ii) der herbiziden Mischungen nach einem der Ansprüche 1 bis 5 oder der herbiziden Zusammensetzung nach Anspruch 6, gemeinsam oder getrennt auf die Pflanzen, Pflanzenteile, Pflanzensamen oder die Fläche, auf der die Pflanzen wachsen, appliziert werden.

8. Verfahren nach Anspruch 7 zur selektiven Bekämpfung von Schadpflanzen in Pflanzenkulturen.

9. Verfahren nach Anspruch 7, worin die Pflanzenkulturen gentechnisch verändert oder durch Mutationsselektion erhalten wurden.

10. Verwendung der herbiziden Mischungen nach einem der Ansprüche 1 bis 5 oder der herbiziden Zusammensetzung nach Anspruch 6 zur Bekämpfung von Schadpflanzen.

11. Verwendung der herbiziden Mischungen nach einem der Ansprüche 1 bis 5 oder der herbiziden Zusammensetzung nach Anspruch 6 zur Bekämpfung von herbizid-resistenten Schadpflanzen.

## Claims

1. Herbicidal mixture, comprising
i) 2-[(2,4-dichlorophenyl)methyl]-4,4-dimethyl-3-isoxazolidinone,
ii) cinmethylin
and
at least one further herbicide of group I:
acetochlor, acifluorfen, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate and -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, - dimethylammonium, -diolamine, -ethyl, -2-ethylhexyl, -isobutyl, -isooctyl, -isopropylammonium, -potassium, -triisopropanol-ammonium and - trolamine, 2,4-DB, 2,4-DB-butyl, -dimethylammonium, -isooctyl, -potassium and -sodium, daimuron (dymron), dalapon, dazomet, n-decanol, desmedipham, detosyl-pyrazolate (DTP), dicamba, dichlobenil, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat dibromide, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-chloro-4-fluoro-5-[4-(3-fluoropropyl)-4,5-dihydro-5-oxo-1H-tetrazol-1-yl]phenyl]ethansulfonamide, F-7967, i.e. 3-[7-chloro-5-fluoro-2-(trifluoromethyl)-1H-benz-imidazol-4-yl]-1-methyl-6-(trifluoromethyl)-pyrimidine-2,4(1H,3H)-dione, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium and -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, - isopropylammonium, -diammonium, -dimethylammonium, -potassium, - sodium and -trimesium, H-9201, i.e. O-(2,4-dimethyl-6-nitrophenyl) O-ethyl isopropylphosphoramidothioate, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(dimethoxy-phosphoryl)ethyl (2,4-dichlorophenoxy)acetate, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, iodosulfuron-methyl-sodium, ioxynil, ioxynil-octanoate, -potassium and -sodium, ipfencarbazone, isoproturon, isouron, isoxaben, isoxaflutole, karbutilate, KUH-043, i.e. 3-({[5-(difluoromethyl)-1-methyl-3-(trifluoromethyl)-1H-pyrazol-4-yl]methyl}sulfonyl)-5,5-dimethyl-4,5-dihydro-1,2-oxazole, ketospiradox, lactofen, lenacil, linuron, MCPA, MCPA-butotyl, -dimethylammonium, -2-ethylhexyl, -isopropylammonium, -potassium and -sodium, MCPB, MCPB-methyl, -ethyl and -sodium, mecoprop, mecoprop-sodium and -butotyl, mecoprop-P, mecoprop-P-butotyl, -dimethylammonium, -2-ethylhexyl and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-ester, MT-5950, i.e. N-[3-chloro-4-(1-methylethyl)phenyl]-2-methylpentanamide, NGGC-011, napropamide, NC-310, i.e. 4-(2,4-dichlorobenzoyl)-1-methyl-5-benzyloxy-pyrazole, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-ethoxy-3-methyl-1-oxobut-3-en-2-yl 5-[2-chloro-4-(trifluoromethyl)phenoxy]-2-nitro-benzoate, SYP-300, i.e. 1-[7-fluoro-3-oxo-4-(prop-2-yn-1-yl)-3,4-dihydro-2H-1,4-benzoxazin-6-yl]-3-propyl-2-thioxoimidazolidine-4,5-dione, 2,3,6-TBA, TCA (trifluoroacetic acid), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-dichloro-N- f 2-[(4,6-dimethoxypyrimidin-2-yl)oxy]benzyl}aniline, and also the following compounds: 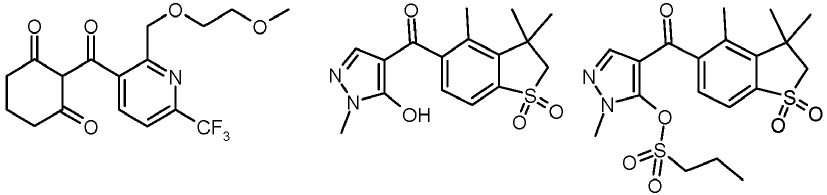 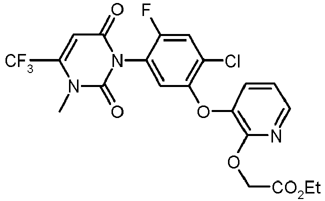
and/or at least one safener, where the application rate, if the composition comprises a safener, is in general 5-2000 g AS/ha, preferably 10-500 g AS/ha and particularly preferably 10-300 g AS/ha.

2. Herbicidal mixture according to Claim 1, comprising at least one safener of the group consisting of: cloquintocet-mexyl, cyprosulfamide, isoxadifen-ethyl and mefenpyr-diethyl.

3. Herbicidal mixture according to either of Claims 1 and 2, wherein the herbicide components, with respect to one another, are present in the weight ratio stated below:
(range component i) : (range component ii)
in general (1-1000):(1 - 1000), preferably (1-100):(1 - 100), particularly preferably (1-50):(1 - 50).

4. Herbicidal mixture according to any of Claims 1 to 3, comprising the respective herbicide components in the application rates stated below:
component i): in general 1 - 2000 g AS/ha, preferably 10 - 1000 g AS/ha, particularly preferably 10 - 500 g AS/ha of 2-[(2,4-dichlorophenyl)methyl]-4,4-dimethyl-3-isoxazolidinone;
component ii): in general 1 - 2000 g AS/ha, preferably 10 - 1000 g AS/ha, particularly preferably 10 - 500 g AS/ha of cinmethylin.

5. Herbicidal mixture according to any of Claims 1 to 4, additionally comprising additives and/or formulation auxiliaries customary in crop protection.

6. Herbicidal composition comprising a mixture according to any of Claims 1 to 5, additionally comprising one or more further components from the group of agrochemical active compounds comprising insecticides and fungicides.

7. Method for controlling unwanted vegetation which comprises applying the components i) and ii) of the herbicidal mixtures according to any of Claims 1 to 5 or the herbicidal composition according to Claim 6 jointly or separately to the plants, plant parts, plant seeds or the area on which the plants grow.

8. Method according to Claim 7 for the selective control of harmful plants in plant crops.

9. Method according to Claim 7 in which the plant crops are genetically modified or have been obtained by mutation selection.

10. Use of the herbicidal mixtures according to any of Claims 1 to 5 or the herbicidal composition according to Claim 6 for controlling harmful plants.

11. Use of the herbicidal mixtures according to any of Claims 1 to 5 or the herbicidal composition according to Claim 6 for controlling herbicide-resistant harmful plants.

## Revendications

1. Mélange herbicide, contenant
i) de la 2-[(2,4-dichlorophényl)méthyl]-4,4-diméthyl-3-isoxazolidinone
ii) de la cinméthyline
et
au moins un autre herbicide du Groupe I :
acétochlor, acifluorfène, acifluorfène-sodium, aclonifène, alachlor, allidochlor, alloxydime, alloxydim-sodium, amétryne, amicarbazone, amidochlor, amidosulfuron, acide 4-amino-3-chloro-6-(4-chloro-2-fluoro-3-méthylphényl)-5-fluoropyridine-2-carboxylique, aminocyclopyrachlor, aminocyclopyrachlor-potassium, aminocyclopyrachlor-méthyl, aminopyralide, amitrole, sulfamate d'ammonium, anilofos, asulame, atrazine, azafénidine, azimsulfuron, beflubutamide, benzazoline, benzazolin-éthyl, benfluraline, benfurésate, bensulfuron, bensulfuron-méthyl, bensulide, bentazone, benzobicyclon, benzofénap, bicyclopyron, bifénox, bilanafos, bilanafos-sodium, bispyribac, bispyribac-sodium, bromacile, bromobutide, bromofénoxime, bromoxynil, butyrate de bromoxynil, bromoxynil-potassium, heptanoate et octanoate de bromoxynil, busoxinone, butachlor, butafénacile, butamifos, buténachlor, butraline, butroxydime, butylate, cafenstrole, carbétamide, carfentrazone, carfentrazone-éthyl, chlorambène, chlorbromuron, chlorfénac, chlorfénac-sodium, chlorfenprop, chlorflurénol, chlorflurénol-méthyl, chloridazon, chlorimuron, chlorimuron-éthyl, chlorophtalime, chlorotoluron, chlorthal-diméthyl, chlorsulfuron, cinidon, cinidon-éthyl, cinosulfuron, clacyfos, clethodime, clodinafop, clodinafop-propargyl, clomazone, cloméprop, clopyralide, cloransulame, cloransulame-méthyl, cumyluron, cyanamide, cyanazine, cycloate, cyclopyrimorate, cyclosulfamuron, cycloxydime, cyhalofop, cyhalofop-butyl, cyprazine, 2,4-D, 2,4-D-butotyl, -butyl, - diméthylammonium, -diolamine, -éthyl, 2-éthylhexyl, -isobutyl, -isooctyl, - isopropylammonium, -potassium, -triisopropanolammonium et -trolamine, 2,4-DB, 2,4-DB-butyl, -diméthylammonium, isooctyl, -potassium et - sodium, daimuron (dymron), dalapon, dazomet, n-décanol, desmédiphame, détosyl-pyrazolate (DTP), dicamba, dichlobénile, 2-(2,5-dichlorobenzyl)-4,4-diméthyl-1,2-oxazolidin-3-one, dichlorprop, dichlorprop-P, diclofop, diclofop-méthyl, diclofop-P-méthyl, diclosulame, difenzoquat, diflufenican, diflufenzopyr, diflufenzopyr-sodium, diméfuron, dimépipérate, diméthachlor, diméthamétryne, diméthénamide, diméthénamide-P, dimétrasulfuron, dinitramine, dinoterb, diphénamide, diquat, dibromure de diquat, dithiopyr, diuron, DNOC, endothal, EPTC, esprocarb, éthalfluraline, éthametsulfuron, éthametsulfuron-méthyl, éthiozine, éthofumésate, éthoxyfène, éthoxyfène-éthyl, éthoxysulfuron, étobenzamide, F-5231, c'est-à-dire N-[2-chloro-4-fluoro-5 - [4-(3 -fluoropropyl)-4,5 -dihydro-5 -oxo-1H-tétrazol-1-yl]-phényl]-éthanesulfonamide, F-7967, c'est-à-dire 3-[7-chloro-5-fluoro-2-(trifluorométhyl)-1H-benzimidazol-4-yl]-1-méthyl-6-(trifluorométhyl)pyrimidine-2,4(1H,3H)-dione, fénoxaprop, fénoxaprop-P, fénoxaprop-éthyl, fénoxaprop-P-éthyl, fénoxasulfone, fenquinotrione, fentrazamide, flamprop, flamprop-M-isopropyl, flamprop-M-méthyl, flazasulfuron, florasulame, fluazifop, fluazifop-P, fluazifop-butyl, fluazifop-P-butyl, flucarbazone, flucarbazone-sodium, flucétosulfuron, fluchloraline, flufénacet, flufenpyr, flufenpyr-éthyl, flumetsulame, flumiclorac, flumiclorac-pentyl, flumioxazine, fluométuron, flurénol, flurénol-butyl, -diméthylammonium et -méthyl, fluoroglycofène, fluoroglycofène-éthyl, flupropanate, flupyrsulfuron, flupyrsulfuron-méthyl-sodium, fluridone, flurochloridone, fluroxypyr, fluroxypyr-meptyl, flurtamone, fluthiacet, fluthiacet-méthyl, fomésafène, fomésafène-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, - diméthylammonium, -potassium, -sodium et -trimésium, H-9201, c'est-à-dire isopropylphosphoramidothioate d'O-(2,4-diméthyl-6-nitrophényl)-O-éthyle, halauxifène, halauxifène-méthyl, halosafène, halosulfuron, halosulfuron-méthyl, haloxyfop, haloxyfop-P, haloxyfop-éthoxyéthyl, haloxyfop-P-éthoxyéthyl, haloxyfop-méthyl, haloxyfop-P-méthyl, hexazinone, HW-02, c'est-à-dire (2,4-dichlorophénoxy)acétate de 1-(diméthoxyphosphoryl)-éthyle, imazaméthabenz, imazaméthabenz-méthyl, imazamox, imazamox-ammonium, imazapic, imazapic-ammonium, imazapyr, imazapyr-isopropylammonium, imazaquine, imazaquine-ammonium, imazéthapyr, imazéthapyr-immonium, imazosulfuron, indanofane, indaziflame, iodosulfuron, iodosulfuron-méthyl-sodium, ioxynil, octanoate d'ioxynil, ioxynil-potassium et sodium, ipfencarbazone, isoproturon, isouron, isoxabène, isoxaflutole, karbutilate, KUH-043, c'est-à-dire 3-({[5-(difluorométhyl)-1-méthyl-3-(trifluorométhyl)-1H-pyrazol-4-yl]méthyl}sulfonyl)-5,5-diméthyl-4,5-dihydro-1,2-oxazole, kétospiradox, lactofène, lénacile, linuron, MCPA, MCPA-butotyl, -diméthylammonium, - 2-éthylhexyl, -isopropylammonium, -potassium et -sodium, MCPB, MCPB-méthyl, -éthyl et -sodium, mécoprop, mécoprop-sodium et -butotyl, mécoprop-P, mécoprop-P-butotyl, -diméthylammonium, -2-éthylhexyl et - potassium, méfénacet, mefluidide, mésosulfuron, mésosulfuron-méthyl, mésotrione, méthabenzthiazuron, métame, métamifop, métamitron, métazachlor, métazosulfuron, méthabenzthiazuron, méthiopyrsulfuron, méthiozoline, isothiocyanate de méthyle, métobromuron, métolachlor, S-métolachlor, métosulame, métoxuron, métribuzine, metsulfuron, metsulfuron-méthyl, molinate, monolinuron, monosulfuron, monosulfuron-ester, MT-5950, c'est-à-dire N-[3-chloro-4-(1-méthyléthyl)-phényl]-2-méthylpentanamide, NGGC-011, napropamide, NC-310, c'est-à-dire 4-(2,4-dichlorobenzoyl)-1-méthyl-5-benzyloxypyrazole, néburon, nicosulfuron, acide nonanoïque (acide pélargonique), norflurazon, acide oléique (acides gras), orbencarb, orthosulfamuron, oryzaline, oxadiargyle, oxadiazon, oxasulfuron, oxazicloméfon, oxyfluorfène, paraquat, dichlorure de paraquat, pébulate, pendiméthaline, pénoxsulame, pentachlorophénol, pentoxazone, péthoxamide, huiles de pétrole, phenmédiphame, piclorame, picolinafène, pinoxadène, pipérophos, prétilachlor, primisulfuron, primisulfuron-méthyl, prodiamine, profoxydime, prométon, prométryne, propachlor, propanile, propaquizafop, propazine, prophame, propisochlor, propoxycarbazone, propoxycarbazone-sodium, propyrisulfuron, propyzamide, prosulfocarb, prosulfuron, pyraclonil, pyraflufène, pyraflufène-éthyl, pyrasulfotole, pyrazolynate (pyrazolate), pyrazosulfuron, pyrazosulfuron-éthyl, pyrazoxyfène, pyribambenz, pyribambenz-isopropyl, pyribambenz-propyl, pyribenzoxime, pyributicarb, pyridafol, pyridate, pyriftalide, pyriminobac, pyriminobac-méthyl, pyrimisulfane, pyrithiobac, pyrithiobac-sodium, pyroxasulfone, pyroxsulame, quinclorac, quinmérac, quinoclamine, quizalofop, quizalofop-éthyl, quizalofop-P, quizalofop-P-éthyl, quizalofop-P-téfuryl, rimsulfuron, saflufénacile, séthoxydime, siduron, simazine, simétryne, SL-261, sulcotrion, sulfentrazone, sulfométuron, sulfométuron-méthyl, sulfosulfuron, SYN-523, SYP-249, c'est-à-dire 5-[2-chloro-4-(trifluorométhyl)phénoxy]-2-nitrobenzoate de 1-éthoxy-3-méthyl-1-oxobut-3-èn-2-yle, SYP-300, c'est-à-dire 1-[7-fluoro-3-oxo-4-(prop-2-yn-1-yl)-3,4-dihydro-2H-1,4-benzoxazin-6-yle]-3-propyl-2-thioxoimidazolidine-4,5-dione, 2,3,6-TBA, TCA (acide trifluoracétique), TCA-sodium, tébuthiuron, téfuryltrione, tembotrione, tépraloxydime, terbacile, terbucarb, terbuméton, terbuthylazine, terbutryne, thénylchlor, thiazopyr, thiencarbazone, thiencarbazone-méthyl, thifensulfuron, thifensulfuron-méthyl, thiobencarb, tiafénacile, tolpyralate, topramézone, tralcoxydime, triafamone, tri-allate, triasulfuron, triaziflame, tribénuron, tribénuron-méthyl, triclopyr, triétazine, trifloxysulfuron, trifloxysulfuron-sodium, trifludimoxazine, trifluraline, triflusulfuron, triflusulfuron-méthyl, tritosulfuron, sulfate d'urée, vémolate, XDE-848, ZJ-0862, c'est-à-dire 3,4-dichloro-N- { 2-[(4,6-diméthoxypyrimidin-2-yl)oxy]benzyl}aniline, ainsi que les composés suivants : 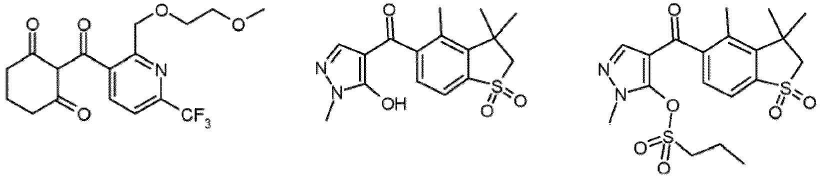 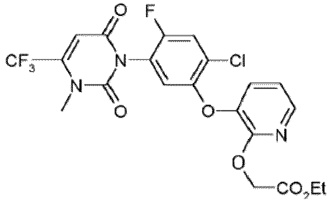
et/ou au moins un phytoprotecteur, la dose d'application, dans la mesure où la composition contient un phytoprotecteur, étant en général de 5 à 2 000 g MA/ha, de préférence de 10 à 500 g MA/ha et d'une manière particulièrement préférée de 10 à 300 g MA/ha.

2. Mélange herbicide selon la revendication 1, contenant au moins un phytoprotecteur du Groupe consistant en le cloquintocet-mexyl, le cyprosulfamide, l'isoxadifène-éthyl et le méfenpyr-diéthyl.

3. Mélange herbicide selon l'une des revendications 1 à 2, dans lequel les composants herbicides présentent entre eux les proportions en poids ci-après :
(domaine composant i):(domaine composant ii)
en général (1-1 000):(1-1 000), de préférence (1-100:(1-100), d'une manière particulièrement préférée (1-50):(1-50).

4. Mélange herbicide selon l'une des revendications 1 à 3, contenant, pour les différents composants herbicides, les doses d'application suivantes :
Composant i) : en général 1 à 2 000 g MA/ha, de préférence 10 à 1 000 g MA/ha, d'une manière particulièrement préférée 10 à 500 g MA/ha de 2-[(2,4-dichlorophényl)méthyl]-4,4-diméthyl-3-isoxazolidinone ; Composant ii) : en général 1 à 2 000 g MA/ha, de préférence 10 à 1 000 g MA/ha, d'une manière particulièrement préférée 10 à 500 g MA/ha de cinméthyline.

5. Mélange herbicide selon l'une des revendications 1 à 4, contenant en outre des additifs et/ou des auxiliaires de formulation usuels en protection des plantes.

6. Composition herbicide contenant un mélange selon l'une des revendications 1 à 5, contenant en outre un ou plusieurs autres composants du Groupe des matières actives agrochimiques, comprenant les insecticides et fongicides.

7. Procédé de lutte contre une croissance indésirable de plantes, dans lequel les composants i) et ii) des mélanges herbicides selon l'une des revendications 1 à 5 ou de la composition herbicide selon la revendication 6, sont appliqués simultanément ou séparément sur les plantes, les parties de plantes, les semences de plantes ou sur l'aire sur laquelle croissent les plantes.

8. Procédé selon la revendication 7, pour la lutte sélective contre les plantes nuisibles dans les cultures de plantes.

9. Procédé selon la revendication 7, dans lequel les cultures de plantes ont été génétiquement modifiées ou ont été obtenues par sélection par mutation.

10. Utilisation des mélanges herbicides selon l'une des revendications 1 à 5 ou de la composition herbicide selon la revendication 6 pour lutter contre les plantes nuisibles.

11. Utilisation des mélanges herbicides selon l'une des revendications 1 à 5 ou de la composition herbicide selon la revendication 6 pour lutter contre les plantes nuisibles résistantes aux herbicides.
